# EUROPEAN PATENT APPLICATION

(11) **EP 4 080 984 A1**
(43) Date of publication of application: **26.10.2022**
(21) Application number: 20910923.0
(22) Date of filing: 31.12.2020
(51) Int. Cl.: H04W 76/11

(54) **COMMUNICATION METHOD AND DEVICE**

(30) Priority: 31.12.2019 CN 201911418087
(71) Applicant: Huawei Technologies Co., Ltd., Shenzhen, Guangdong 518129 (CN)
(72) Inventor: ZHOU, Xiaoyun, Shenzhen, Guangdong 518129 (CN)
(74) Representative: Grünecker Patent- und Rechtsanwälte PartG mbB
(86) International application number: PCT/CN2020/142020
(87) International publication number: WO 2021/136485

(57) **Abstract**

This application provides a communication method and apparatus. A session management network element may send a first policy rule and a second policy rule to a first user plane network element. Therefore, the first user plane network element performs the following actions according to the first policy rule: including identification information of a first session or second indication information in first data of a first application, and sending the first data to a first application server. The first user plane network element performs the following actions according to the second policy rule: identifying second data that carries the identification information of the first session and that is initiated by the first application server, and sending the second data to a network element associated with the first session, so as to send, through the first session, the second data to the network element associated with the first session. The network element associated with the first session may be configured to send the second data to a terminal or a second application server, so that a data flow newly initiated by a local application server is steered to an application server in a data network or the terminal.

## Description

### CROSS-REFERENCE TO RELATED APPLICATIONS

This application claims priority to Chinese Patent Application No. 201911418087.3, filed with the China National Intellectual Property Administration on December 31, 2019 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a 5th generation (5th generation, 5G) mobile communication system, after accessing a network, a terminal (UE) establishes a protocol data unit (protocol data unit, PDU) session, accesses an external data network (data network, DN) through the PDU session, and interacts with an application server (application service, AS) deployed in the data network. Based on different data accessed by users, the network may select, according to a network policy, a user plane function (user plane function, UPF) that accesses the data network as a protocol data unit anchor (PDU session anchor) (where the protocol data unit anchor may be referred to as an anchor for short below), and access the application server through an N6 interface of the PSA. Application servers of a same application may be deployed at a plurality of locations. In this way, the network can select, based on an access location of the terminal, an anchor that is close to the terminal and that can support the terminal in accessing the data network, to reduce route recurvation and reduce a network delay.

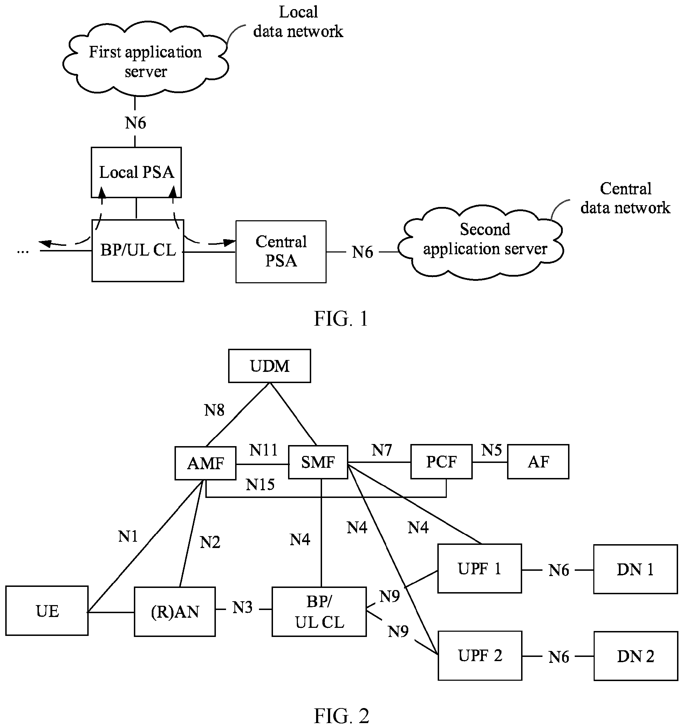

Currently, a new application scenario is further proposed. Data of some applications (where for ease of description, these applications may be referred to as local applications subsequently) needs to be processed by an application server deployed in a data network of a local area network (local area network, LAN). A server of the local application is, for example, a server deployed in a local (local) data network in a mobile edge computing (mobile edge compute, MEC) environment. As shown in FIG. 1, after being sent by a terminal, a data flow that carries uplink data of a local application needs to be offloaded to a local PSA through a branch point (branch point) or an uplink classifier (uplink classifier), and then steered to an application server (which may be referred to as a first application server or a local application server below) in a local area network. The application server processes the uplink data. The data flow that carries the uplink data processed by the first application server needs to be steered to a central PSA (also referred to as a remote PSA), and then the central PSA sends the data flow to an application server (which may be referred to as a second application server below) in a central (central) data network. Therefore, processing of the uplink data by the first application server is implemented. In addition, after being sent by the second application server in the central data network to the central PSA, a data flow that carries downlink data of the local application needs to be offloaded to the local PSA through the BP/UL CL and then steered to the first application server, and the data flow that carries the data processed by the first application server needs to be steered to the terminal. Therefore, processing of the downlink data by the first application server is implemented. In some scenarios, the BP/UL CL and the local PSA are co-located. In this case, an offloading operation between the BP/UL CL and the local PSA may be omitted.

In this scenario, after the first application server receives the data flow from the local PSA, the data flow may be terminated to support more diversified processing manners for data in the data flow. After processing the terminated data, the first application server initiates a new data flow and carries the processed data. The newly initiated data flow and the data flow before processing are two different data flows, and the newly initiated data flow cannot be steered to the application server in the data network or the terminal through the local PSA.

### SUMMARY

This application provides a communication method and apparatus, to steer a data flow newly initiated by a local application server to an application server in a data network or a terminal.

According to a first aspect, this application provides a communication method. The communication method may be performed by a session management network element or a chip in the session management network element. The session management network element is configured to manage a session (for example, a PDU session), and the session management network element is, for example, an SMF.

According to the method, the session management network element may determine a first policy rule and a second policy rule. The first policy rule may indicate a first user plane network element to steer first data of a first application to a first application server. The second policy rule may indicate the first user plane network element to determine to send second data of the first application to a network element associated with a first session, the first session is used to transmit data of the first application between a terminal and a second application server, the second data comes from the first application server, the second data includes an address of the first application server, and the second data includes identification information of the first session. The session management network element may further send the first policy rule and the second policy rule to the first user plane network element.

The first policy rule includes first indication information, the first indication information is used by the first user plane network element to determine to include second indication information in the first data, and the second indication information is used by the first application server to determine to include the identification information of the first session in the second data; and/or the first indication information is used by the first user plane network element to determine to include the identification information of the first session in the second data, and the identification information of the first session is used by the first application server to determine to include the identification information of the first session in the second data.

In the foregoing method, the session management network element may send the first policy rule and the second policy rule to the first user plane network element. Therefore, the first user plane network element performs the following actions according to the first policy rule: including the identification information of the first session or the second indication information in the first data of the first application, and sending the first data to the first application server. The first user plane network element performs the following actions according to the second policy rule: identifying the second data that carries the identification information of the first session and that is initiated by the first application server, and sending the second data to the network element associated with the first session, so as to send, through the first session, the second data to the network element associated with the first session. The network element associated with the first session may be configured to send the second data to the terminal or the second application server, so that a data flow newly initiated by a local application server is steered to an application server in a data network or the terminal.

The identification information of the first session may include an identifier allocated by the first user plane network element to the first session or address information of the first session. The address information of the first session may include an IPv6 address prefix (or an address corresponding to the IPv6 address prefix), an IPv6 address, or an IPv4 address used by the terminal to access the first application.

For example, the second policy rule may include the identification information of the first session, so that the first user plane network element determines to send the second data to the network element associated with the first session.

In a possible example, the session management network element may further receive third indication information from a policy control network element, where the third indication information is used to indicate the first application server to terminate a data flow of the first application. The session management network element may include the first indication information in the first policy rule based on the third indication information.

In another possible example, the session management network element may receive fourth indication information from a policy control network element, where the fourth indication information is used to indicate the first application server to terminate a data flow of the first application. The session management network element may include the identification information of the first session in the first policy rule based on the fourth indication information.

The network element associated with the first session may include an access network element of the first session, a second user plane network element, a branch point network element, or an uplink classifier network element. The terminal accesses the radio access network element. The second user plane network element is configured to access the second application server. The branch point network element is configured to send the first data to the first user plane network element. The uplink classifier network element is configured to send the first data to the first user plane network element.

According to a second aspect, this application provides a communication method. The communication method may be performed by a first user plane network element or a chip in the first user plane network element. The first user plane network element is configured to access a data network of a first application server. The first application server may be a local application server. The first user plane network element may be a UPF.

According to the method, the first user plane network element may receive a first policy rule and a second policy rule from a session management network element. The first policy rule may indicate the first user plane network element to send first data of a first application to the first application server. The second policy rule may indicate the first user plane network element to send second data of the first application to a network element associated with a first session, the first session is used to transmit data of the first application between a terminal and a second application server, the second data comes from the first application server, and the second data includes an address of the first application server.

The first policy rule includes first indication information, the first indication information is used by the first user plane network element to determine to include second indication information in the first data, and the second indication information is used to indicate the first application server to include identification information of the first session in the second data; and/or the first indication information is used by the first user plane network element to determine to include the identification information of the first session in the second data, and the identification information of the first session is used by the first application server to determine to include the identification information of the first session in the second data.

The identification information of the first session includes an identifier allocated by the first user plane network element to the first session or address information of the first session.

The second policy rule may further include the identification information of the first session, and the identification information of the first session is used by the first user plane network element to determine to send the second data to the network element associated with the first session.

The network element associated with the first session may include an access network element of the first session, a second user plane network element, a branch point network element, or an uplink classifier network element. The terminal accesses the radio access network element. The second user plane network element is configured to access the second application server. The branch point network element is configured to send the first data to the first user plane network element. The uplink classifier network element is configured to send the first data to the first user plane network element.

For beneficial effects of the communication method shown in the second aspect, refer to the descriptions of the beneficial effects of the communication method in the first aspect.

According to a third aspect, this application provides a communication method. The communication method may be performed by a first application server or a chip in the first application server. The first application server may be a local application server deployed in a local data network.

According to the method, the first application server may receive first data of a first application from a first user plane network element, where the first data includes second indication information or identification information of a first session. The first application server includes the identification information of the first session in second data based on the second indication information or the identification information of the first session, where the first session is used to transmit data of the first application between a terminal and a second application server, and the second data is determined based on the first data. The first application server may further send the second data to the first user plane network element.

The identification information of the first session is an identifier allocated by the first user plane network element to the first session or is address information of the first session.

For beneficial effects of the communication method shown in the third aspect, refer to the descriptions of the beneficial effects of the communication method in the first aspect.

According to a fourth aspect, an embodiment of this application provides a communication method. The communication method may be performed by a session management network element or a chip in the session management network element.

According to the method, the session management network element may receive an address of a first application server from a policy control network element. The session management network element determines a first policy rule and a second policy rule. The first policy rule is used to indicate a first user plane network element to steer first data of a first application to the first application server, the second policy rule includes the address of the first application server, the address of the first application server is used by the first user plane network element to determine to send second data to a network element associated with a first session, and the first session is used to transmit data of the first application between a terminal and a second application server. The second data comes from the first application server, and the second data includes the address of the first application server. The session management network element may further send the first policy rule and the second policy rule to the first user plane network element.

In the foregoing method, the session management network element may include the address of the first application server in the second policy rule sent to the first user plane network element. Therefore, the first user plane network element performs the following actions: identifying the second data that carries the address of the first application server, and sending the second data to the network element associated with the first session, so as to send, through the first session, the second data to the network element associated with the first session. The network element associated with the first session may be configured to send the second data to the terminal or the second application server, so that a data flow newly initiated by a local application server is steered to an application server in a data network or the terminal.

The network element associated with the first session may include an access network element of the first session, a second user plane network element, a branch point network element, or an uplink classifier network element. The terminal accesses the radio access network element. The second user plane network element is configured to access the second application server. The branch point network element is configured to send the first data to the first user plane network element. The uplink classifier network element is configured to send the first data to the first user plane network element.

According to a fifth aspect, an embodiment of this application provides a communication method. The communication method may be performed by a first user plane network element or a chip in the first user plane network element.

According to the method, the first user plane network element may receive a first policy rule and a second policy rule from a session management network element. The first policy rule is used to indicate the first user plane network element to steer first data of a first application to a first application server, the second policy rule includes an address of the first application server, the address of the first application server is used by the first user plane network element to determine to send second data to a network element associated with a first session, and the first session is used to transmit data of the first application between a terminal and a second application server. The second data comes from the first application server, and the second data includes the address of the first application server.

For beneficial effects of the communication method shown in the fifth aspect, refer to the descriptions of the beneficial effects of the communication method in the fourth aspect.

According to a sixth aspect, an embodiment of this application provides a communication method. The communication method may be performed by a policy control network element or a chip in the policy control network element. The policy control network element is, for example, a PCF.

According to the method, the policy control network element may receive a request message from a first application function network element, where the request message includes an address of a terminal and an address of a first application server, the first application server corresponds to a first application, and the first server corresponds to the first application function network element. The policy control network element may determine, based on the address of the terminal, that the request message is associated with a first session, where the first session is used to transmit data of the first application between the terminal and a second application server, and the second application server corresponds to the first application. The policy control network element may further send the address of the first application server to a session management network element of the first session.

For beneficial effects of the communication method shown in the sixth aspect, refer to the descriptions of the beneficial effects of the communication method in the fourth aspect.

According to a seventh aspect, an embodiment of this application provides a communication method. The communication method may be performed by a session management network element (or a chip in the session management network element), a first user plane network element (or a chip in the first user plane network element), and a first application server (or a chip in the first application server).

According to the method, the session management network element may determine a first policy rule and a second policy rule. The first policy rule may indicate the first user plane network element to steer first data of a first application to the first application server. The second policy rule may indicate the first user plane network element to determine to send second data of the first application to a network element associated with a first session, the first session is used to transmit data of the first application between a terminal and a second application server, the second data comes from the first application server, the second data includes an address of the first application server, and the second data includes identification information of the first session. The session management network element may further send the first policy rule and the second policy rule to the first user plane network element.

The first policy rule includes first indication information, the first indication information is used by the first user plane network element to determine to include second indication information in the first data, and the second indication information is used by the first application server to determine to include the identification information of the first session in the second data; and/or the first indication information is used by the first user plane network element to determine to include the identification information of the first session in the second data, and the identification information of the first session is used by the first application server to determine to include the identification information of the first session in the second data.

The first user plane network element may be configured to receive the first policy rule and the second policy rule.

The first application server may be configured to receive the first data of the first application from the first user plane network element, where the first data includes the second indication information or the identification information of the first session. The first application server includes the identification information of the first session in the second data based on the second indication information or the identification information of the first session, where the first session is used to transmit the data of the first application between the terminal and the second application server, and the second data is determined based on the first data. The first application server may further send the second data to the first user plane network element.

According to an eighth aspect, an embodiment of this application provides a communication method. The communication method may be performed by a session management network element (or a chip in the session management network element), a policy control network element (or a chip in the policy control network element), and a first user plane network element (or a chip in the first user plane network element).

According to the method, the policy control network element may receive a request message from a first application function network element, where the request message includes an address of a terminal and an address of a first application server, the first application server corresponds to a first application, and the first server corresponds to the first application function network element. The policy control network element may be further configured to determine, based on the address of the terminal, that the request message is associated with a first session, where the first session is used to transmit data of the first application between the terminal and a second application server, and the second application server corresponds to the first application. The policy control network element may be further configured to send the address of the first application server to the session management network element.

The session management network element may be configured to receive the address of the first application server. The session management network element may be further configured to determine a first policy rule and a second policy rule, where the first policy rule is used to indicate the first user plane network element to steer first data of the first application to the first application server, the second policy rule includes the address of the first application server, the address of the first application server is used by the first user plane network element to determine to send second data to a network element associated with the first session, the second data comes from the first application server, and the second data includes the address of the first application server. The session management network element may further send the first policy rule and the second policy rule to the first user plane network element.

The first user plane network element may be configured to receive the first policy rule and the second policy rule.

According to a ninth aspect, an embodiment of this application provides a communication apparatus. An embodiment of this application provides a communication apparatus. The communication apparatus may be configured to perform the steps performed by the session management network element in any one of the first aspect or the possible designs of the first aspect. The communication apparatus may implement the functions, the steps, or the operations in the foregoing methods in a form of a hardware structure, a software module, or a combination of a hardware structure and a software module. For example, functional modules corresponding to the functions, the steps, or the operations in the foregoing methods may be disposed in the communication apparatus, to support the communication apparatus in performing the foregoing methods.

For example, the communication apparatus may be a session management network element or a chip in the session management network element.

When the communication apparatus shown in the ninth aspect is implemented by using a software module, the communication apparatus may include a processing module and a communication module. For example, the communication module may be coupled to the processing module, and the communication module may be configured to support the communication apparatus in communication. The processing module may be used by the communication apparatus to perform a processing operation, for example, generate information/a message that needs to be sent, or process a received signal to obtain information/a message.

The communication module may be configured to perform a sending action and/or a receiving action performed by the session management network element in the foregoing methods, for example, configured to perform an action of sending information, a message, or signaling by the session management network element to a first user plane network element. In addition, the processing module may be configured to perform a processing action of the session management network element in the foregoing methods, for example, configured to determine a first policy rule and/or a second policy rule, or configured to control the communication module to perform operations such as receiving and/or sending information, a message, or signaling, and processing and storing information.

Specifically, the processing module may be configured to determine the first policy rule and the second policy rule shown in the first aspect. The communication module may be configured to send the first policy rule and the second policy rule to the first user plane network element.

In a possible example, the communication module may be further configured to receive third indication information from a policy control network element, where the third indication information is used to indicate a first application server to terminate a data flow of a first application. The processing module may be further configured to include first indication information in the first policy rule based on the third indication information.

In another possible example, the communication module may be further configured to receive fourth indication information from a policy control network element, where the fourth indication information is used to indicate a first application server to terminate a data flow of a first application. The processing module may be further configured to include identification information of a first session in the first policy rule based on the fourth indication information.

When the communication apparatus shown in the ninth aspect is implemented by using a hardware component, the communication apparatus may include a communication interface. For example, the communication interface may be coupled to a processor, and the communication interface may be configured to support the communication apparatus in communication. The processor may be used by the communication apparatus to perform a processing operation, for example, generate information/a message that needs to be sent, or process a received signal to obtain information/a message.

The communication interface may be configured to perform a sending action and/or a receiving action performed by the session management network element in the foregoing methods, for example, configured to perform an action of sending information, a message, or signaling by the session management network element to a first user plane network element. In addition, the processor may be configured to perform a processing action of the session management network element in the methods, for example, configured to determine a first policy rule and/or a second policy rule, and configured to control the communication interface to perform operations such as receiving and/or sending information, a message, or signaling, and processing and storing information, a message, or signaling.

Specifically, the processor may be configured to determine the first policy rule and the second policy rule shown in the first aspect. The communication interface may be configured to send the first policy rule and the second policy rule to the first user plane network element.

In a possible example, the communication interface may be further configured to receive third indication information from a policy control network element, where the third indication information is used to indicate a first application server to terminate a data flow of a first application. The processor may be further configured to include first indication information in the first policy rule based on the third indication information.

In another possible example, the communication interface may be further configured to receive fourth indication information from a policy control network element, where the fourth indication information is used to indicate a first application server to terminate a data flow of a first application. The processor may be further configured to include identification information of a first session in the first policy rule based on the fourth indication information.

According to a tenth aspect, an embodiment of this application provides a communication apparatus. An embodiment of this application provides a communication apparatus. The communication apparatus may be configured to perform the steps performed by the first user plane network element in any one of the second aspect or the possible designs of the second aspect. The communication apparatus may implement the functions, the steps, or the operations in the foregoing methods in a form of a hardware structure, a software module, or a combination of a hardware structure and a software module. For example, functional modules corresponding to the functions, the steps, or the operations in the foregoing methods may be disposed in the communication apparatus, to support the communication apparatus in performing the foregoing methods.

For example, the communication apparatus may be a first user plane network element or a chip in the first user plane network element.

When the communication apparatus shown in the tenth aspect is implemented by using a software module, the communication apparatus may include a processing module and a communication module. For example, the communication module may be coupled to the processing module, and the communication module may be configured to support the communication apparatus in communication. The processing module may be used by the communication apparatus to perform a processing operation, for example, generate information/a message that needs to be sent, or process a received signal to obtain information/a message.

The communication module may be configured to perform a sending action and/or a receiving action performed by the first user plane network element in the foregoing methods, for example, configured to perform an action of receiving information, a message, or signaling from a session management network element. In addition, the processing module may be configured to perform a processing action of the first user plane network element in the foregoing methods, for example, configured to control the communication module to perform operations such as receiving and/or sending information, a message, or signaling, and processing and storing information.

Specifically, the communication module may be configured to receive a first policy rule and a second policy rule from the session management network element.

When the communication apparatus shown in the tenth aspect is implemented by using a hardware component, the communication apparatus may include a communication interface. For example, the communication interface may be coupled to a processor, and the communication interface may be configured to support the communication apparatus in communication. The processor may be used by the communication apparatus to perform a processing operation, for example, generate information/a message that needs to be sent, or process a received signal to obtain information/a message.

The communication interface may be configured to perform a sending action and/or a receiving action performed by the first user plane network element in the foregoing methods, for example, configured to perform an action of receiving information, a message, or signaling from a session management network element. In addition, the processor may be configured to perform a processing action of the first user plane network element in the methods, for example, configured to control the communication interface to perform operations such as receiving and/or sending information, a message, or signaling, and processing and storing information, a message, or signaling.

Specifically, the communication interface may be configured to receive a first policy rule and a second policy rule from the session management network element.

According to an eleventh aspect, an embodiment of this application provides a communication apparatus. An embodiment of this application provides a communication apparatus. The communication apparatus may be configured to perform the steps performed by the first application server in any one of the third aspect or the possible designs of the third aspect. The communication apparatus may implement the functions, the steps, or the operations in the foregoing methods in a form of a hardware structure, a software module, or a combination of a hardware structure and a software module. For example, functional modules corresponding to the functions, the steps, or the operations in the foregoing methods may be disposed in the communication apparatus, to support the communication apparatus in performing the foregoing methods.

For example, the communication apparatus may be a first application server or a chip in the first application server.

When the communication apparatus shown in the eleventh aspect is implemented by using a software module, the communication apparatus may include a processing module and a communication module. For example, the communication module may be coupled to the processing module, and the communication module may be configured to support the communication apparatus in communication. The processing module may be used by the communication apparatus to perform a processing operation, for example, generate information/a message that needs to be sent, or process a received signal to obtain information/a message.

The communication module may be configured to perform a sending action and/or a receiving action performed by the first application server in the foregoing methods, for example, configured to perform an action of receiving data, information, a message, or signaling from a first user plane network element. In addition, the processing module may be configured to perform a processing action of the first application server in the foregoing methods, for example, configured to control the communication module to perform operations such as receiving and/or sending information, a message, or signaling, and processing and storing information.

Specifically, the communication module may receive first data of a first application from the first user plane network element, where the first data includes second indication information or identification information of a first session. The processing module may include the identification information of the first session in second data based on the second indication information or the identification information of the first session. The communication module may further send the second data to the first user plane network element.

When the communication apparatus shown in the eleventh aspect is implemented by using a hardware component, the communication apparatus may include a communication interface. For example, the communication interface may be coupled to a processor, and the communication interface may be configured to support the communication apparatus in communication. The processor may be used by the communication apparatus to perform a processing operation, for example, generate information/a message that needs to be sent, or process a received signal to obtain information/a message.

The communication interface may be configured to perform a sending action and/or a receiving action performed by the first application server in the foregoing methods, for example, configured to perform an action of receiving data, information, a message, or signaling from a first user plane network element. In addition, the processor may be configured to perform a processing action of the first application server in the foregoing methods, for example, configured to control the communication module to perform operations such as receiving and/or sending information, a message, or signaling, and processing and storing information.

Specifically, the communication interface may receive first data of a first application from the first user plane network element, where the first data includes second indication information or identification information of a first session. The processor may include the identification information of the first session in second data based on the second indication information or the identification information of the first session. The communication interface may further send the second data to the first user plane network element.

According to a twelfth aspect, an embodiment of this application provides a communication apparatus. An embodiment of this application provides a communication apparatus. The communication apparatus may be configured to perform the steps performed by the session management network element in any one of the fourth aspect or the possible designs of the fourth aspect. The communication apparatus may implement the functions, the steps, or the operations in the foregoing methods in a form of a hardware structure, a software module, or a combination of a hardware structure and a software module. For example, functional modules corresponding to the functions, the steps, or the operations in the foregoing methods may be disposed in the communication apparatus, to support the communication apparatus in performing the foregoing methods.

For example, the communication apparatus may be a session management network element or a chip in the session management network element.

When the communication apparatus shown in the twelfth aspect is implemented by using a software module, the communication apparatus may include a processing module and a communication module. For example, the communication module may be coupled to the processing module, and the communication module may be configured to support the communication apparatus in communication. The processing module may be used by the communication apparatus to perform a processing operation, for example, generate information/a message that needs to be sent, or process a received signal to obtain information/a message.

The communication module may be configured to perform a sending action and/or a receiving action performed by the session management network element in the foregoing methods, for example, configured to perform an action of sending information, a message, or signaling by the session management network element to a policy control network element and/or a first user plane network element. In addition, the processing module may be configured to perform a processing action of the session management network element in the foregoing methods, for example, configured to determine a first policy rule and/or a second policy rule, or configured to control the communication module to perform operations such as receiving and/or sending information, a message, or signaling, and processing and storing information.

Specifically, the communication module may receive an address of a first application server from a policy control network element. The session management network element determines a first policy rule and a second policy rule. The communication module may be further configured to send the first policy rule and the second policy rule to the first user plane network element.

When the communication apparatus shown in the twelfth aspect is implemented by using a hardware component, the communication apparatus may include a communication interface. For example, the communication interface may be coupled to a processor, and the communication interface may be configured to support the communication apparatus in communication. The processor may be used by the communication apparatus to perform a processing operation, for example, generate information/a message that needs to be sent, or process a received signal to obtain information/a message.

The communication interface may be configured to perform a sending action and/or a receiving action performed by the session management network element in the foregoing methods, for example, configured to perform an action of sending information, a message, or signaling by the session management network element to a policy control network element and/or a first user plane network element. In addition, the processor may be configured to perform a processing action of the session management network element in the methods, for example, configured to determine a first policy rule and/or a second policy rule, and configured to control the communication interface to perform operations such as receiving and/or sending information, a message, or signaling, and processing and storing information, a message, or signaling.

Specifically, the communication interface may receive an address of a first application server from a policy control network element. The processor may be configured to determine the first policy rule and the second policy rule. The communication interface may be further configured to send the first policy rule and the second policy rule to the first user plane network element.

According to a thirteenth aspect, an embodiment of this application provides a communication apparatus. An embodiment of this application provides a communication apparatus. The communication apparatus may be configured to perform the steps performed by the first user plane network element in any one of the fifth aspect or the possible designs of the fifth aspect. The communication apparatus may implement the functions, the steps, or the operations in the foregoing methods in a form of a hardware structure, a software module, or a combination of a hardware structure and a software module. For example, functional modules corresponding to the functions, the steps, or the operations in the foregoing methods may be disposed in the communication apparatus, to support the communication apparatus in performing the foregoing methods.

For example, the communication apparatus may be a first user plane network element or a chip in the first user plane network element.

When the communication apparatus shown in the thirteenth aspect is implemented by using a software module, the communication apparatus may include a processing module and a communication module. For example, the communication module may be coupled to the processing module, and the communication module may be configured to support the communication apparatus in communication. The processing module may be used by the communication apparatus to perform a processing operation, for example, generate information/a message that needs to be sent, or process a received signal to obtain information/a message.

The communication module may be configured to perform a sending action and/or a receiving action performed by the first user plane network element in the foregoing methods, for example, configured to perform an action of receiving information, a message, or signaling from a session management network element. In addition, the processing module may be configured to perform a processing action of the first user plane network element in the foregoing methods, for example, configured to control the communication module to perform operations such as receiving and/or sending information, a message, or signaling, and processing and storing information.

Specifically, the communication module may be configured to receive a first policy rule and a second policy rule from the session management network element.

When the communication apparatus shown in the thirteenth aspect is implemented by using a hardware component, the communication apparatus may include a communication interface. For example, the communication interface may be coupled to a processor, and the communication interface may be configured to support the communication apparatus in communication. The processor may be used by the communication apparatus to perform a processing operation, for example, generate information/a message that needs to be sent, or process a received signal to obtain information/a message.

The communication interface may be configured to perform a sending action and/or a receiving action performed by the first user plane network element in the foregoing methods, for example, configured to perform an action of receiving information, a message, or signaling from a session management network element. In addition, the processor may be configured to perform a processing action of the first user plane network element in the methods, for example, configured to control the communication interface to perform operations such as receiving and/or sending information, a message, or signaling, and processing and storing information, a message, or signaling.

Specifically, the communication interface may be configured to receive a first policy rule and a second policy rule from the session management network element.

According to a fourteenth aspect, an embodiment of this application provides a communication apparatus. An embodiment of this application provides a communication apparatus. The communication apparatus may be configured to perform the steps performed by the policy control network element in any one of the sixth aspect or the possible designs of the sixth aspect. The communication apparatus may implement the functions, the steps, or the operations in the foregoing methods in a form of a hardware structure, a software module, or a combination of a hardware structure and a software module. For example, functional modules corresponding to the functions, the steps, or the operations in the foregoing methods may be disposed in the communication apparatus, to support the communication apparatus in performing the foregoing methods.

For example, the communication apparatus may be a policy control network element or a chip in the policy control network element.

When the communication apparatus shown in the fourteenth aspect is implemented by using a software module, the communication apparatus may include a processing module and a communication module. For example, the communication module may be coupled to the processing module, and the communication module may be configured to support the communication apparatus in communication. The processing module may be used by the communication apparatus to perform a processing operation, for example, generate information/a message that needs to be sent, or process a received signal to obtain information/a message.

The communication module may be configured to perform a sending action and/or a receiving action performed by the policy control network element in the foregoing methods, for example, configured to perform an action of sending information, a message, or signaling by the policy control network element to a session management network element. In addition, the processing module may be configured to perform a processing action of the session management network element in the foregoing methods, for example, configured to control the communication module to perform operations such as receiving and/or sending information, a message, or signaling, and processing and storing information.

Specifically, the communication module may receive a request message from a first application function network element, where the request message includes an address of a terminal and an address of a first application server, the first application server corresponds to a first application, and the first server corresponds to the first application function network element. The processing module may determine, based on the address of the terminal, that the request message is associated with a first session, where the first session is used to transmit data of the first application between the terminal and a second application server, and the second application server corresponds to the first application. The communication module may be further configured to send the address of the first application server to the session management network element.

When the communication apparatus shown in the fourteenth aspect is implemented by using a hardware component, the communication apparatus may include a communication interface. For example, the communication interface may be coupled to a processor, and the communication interface may be configured to support the communication apparatus in communication. The processor may be used by the communication apparatus to perform a processing operation, for example, generate information/a message that needs to be sent, or process a received signal to obtain information/a message.

The communication interface may be configured to perform a sending action and/or a receiving action performed by the policy control network element in the foregoing methods, for example, configured to perform an action of sending information, a message, or signaling by the policy control network element to a session management network element. In addition, the processor may be configured to perform a processing action of the session management network element in the methods, for example, configured to control the communication interface to perform operations such as receiving and/or sending information, a message, or signaling, and processing and storing information, a message, or signaling.

Specifically, the communication interface may receive a request message from a first application function network element, where the request message includes an address of a terminal and an address of a first application server, the first application server corresponds to a first application, and the first server corresponds to the first application function network element. The processor may determine, based on the address of the terminal, that the request message is associated with a first session, where the first session is used to transmit data of the first application between the terminal and a second application server, and the second application server corresponds to the first application. The communication interface may be further configured to send the address of the first application server to the session management network element.

According to a fifteenth aspect, an embodiment of this application provides a communication system. The system may include the communication apparatuses shown in the ninth aspect, the tenth aspect, and the eleventh aspect.

According to a sixteenth aspect, an embodiment of this application provides a communication system. The system may include the communication apparatuses shown in the twelfth aspect, the thirteenth aspect, and the fourteenth aspect.

According to a seventeenth aspect, an embodiment of this application provides a computer-readable storage medium. The computer-readable storage medium is configured to store a computer program or instructions. When the computer program or the instructions are executed, the method shown in the first aspect, the second aspect, the third aspect, the fourth aspect, the fifth aspect, or the sixth aspect is implemented.

According to an eighteenth aspect, an embodiment of this application provides a computer program product. The computer program product includes a computer program or instructions. When the computer program or the instructions are executed, the method shown in the first aspect, the second aspect, the third aspect, the fourth aspect, the fifth aspect, or the sixth aspect is implemented.

According to a nineteenth aspect, this application provides a chip and/or a chip system including the chip. The chip may include a processor. When the chip executes a computer program in a memory, the method shown in the first aspect, the second aspect, the third aspect, the fourth aspect, the fifth aspect, or the sixth aspect is performed. The chip system may include the chip, or may include the chip and another discrete component, for example, a memory (or a storage module) and/or a transceiver (or a communication module).

### BRIEF DESCRIPTION OF DRAWINGS

FIG. 1 is a schematic diagram of an architecture in which a local application server and a central DN application server process application data;
FIG. 2 is a schematic diagram of an architecture of a communication system according to an embodiment of this application;
FIG. 3 is a schematic diagram of an architecture of another communication system according to an embodiment of this application;
FIG. 4 is a schematic flowchart of a communication method according to an embodiment of this application;
FIG. 5A and FIG. 5B are a schematic flowchart of another communication method according to an embodiment of this application;
FIG. 6A and FIG. 6B are a schematic flowchart of another communication method according to an embodiment of this application;
FIG. 7 is a schematic flowchart of another communication method according to an embodiment of this application;
FIG. 8A, FIG. 8B, and FIG. 8C are a schematic flowchart of another communication method according to an embodiment of this application;
FIG. 9A, FIG. 9B, and FIG. 9C are a schematic flowchart of another communication method according to an embodiment of this application;
FIG. 10 is a schematic diagram of a structure of a communication apparatus according to an embodiment of this application;
FIG. 11 is a schematic diagram of a structure of another communication apparatus according to an embodiment of this application;
FIG. 12 is a schematic diagram of a structure of another communication apparatus according to an embodiment of this application;
FIG. 13 is a schematic diagram of a structure of another communication apparatus according to an embodiment of this application;
FIG. 14 is a schematic diagram of a structure of another communication apparatus according to an embodiment of this application;
FIG. 15 is a schematic diagram of a structure of another communication apparatus according to an embodiment of this application;
FIG. 16 is a schematic structural diagram of another communication apparatus according to an embodiment of this application; and
FIG. 17 is a schematic diagram of a structure of another communication apparatus according to an embodiment of this application.

### DESCRIPTION OF EMBODIMENTS

A communication method provided in embodiments of this application may be used in a scenario shown in FIG. 2.

A network architecture shown in FIG. 2 may include three parts: a terminal, a data network (data network, DN), and a carrier network.

The carrier network may include a policy control function (policy control function, PCF), a unified data management (unified data management, UDM), an application function (application function, AF), and an access and mobility management function (access and mobility management function, AMF), a session management function (session management function, SMF), a (radio) access network ((radio) access network, (R)AN), a user plane function (user plane function, UPF), and the like. In the foregoing carrier network, parts other than the (radio) access network may be included in a scope of a core network (core network, CN). For ease of description, an example in which the (R)AN is referred to as a RAN is used below for description.

The mobility management network element shown above is a control plane network element provided by the carrier network, and is responsible for access control and mobility management when the terminal accesses the carrier network. For example, the mobility management network element has functions such as mobility status management, allocation of a temporary user identity, and user authentication and authorization. In 5G, the mobility management network element may be an AMF. In future communication, for example, 6th generation (the 6th generation, 6G), the mobility management network element may still be an AMF or may have another name. This is not limited in this application.

The policy control network element is a control plane function provided by a carrier, and is configured to provide a PDU session policy for the session management network element. The policy may include a chargingrelated policy, a quality of service (quality of service, QoS)-related policy, a data flow identification and steering (also referred to as forwarding) policy, an authorization-related policy, and the like. In 5G, the policy control network element may be a PCF. In future communication, for example, 6G, the policy control network element may still be a PCF or may have another name. This is not limited in this application.

The session management network element shown above is a control plane network element provided by the carrier network, and is responsible for managing a PDU session of the terminal. In other words, the session management network element serves the PDU session of the terminal. The PDU session is a channel used to transmit a PDU, and the terminal and the DN needs to transmit a PDU to each other through the PDU session. The SMF is responsible for establishment, maintenance, deletion, and the like of the PDU session. The SMF includes functions related to a session, for example, session management (for example, session establishment, modification, and release, including tunnel maintenance between the UPF and the RAN), selection and control of the UPF, service and session continuity (service and session continuity, SSC) mode selection, and roaming. The SMF may be configured to select a UPF serving a user, for example, select a UPF that is closer to a base station for the user, to reduce a packet sending and receiving delay of the user. In 5G, the session management network element may be an SMF. In future communication, for example, 6G, the session management network element may still be an SMF or may have another name. This is not limited in this application.

In this application, the session management network element may further insert a branch point (Branch Point, BP) and/or an uplink classifier (Uplink Classifier, UL CL) between an access network element and an anchor UPF of the terminal based on a requirement. Each BP/UL CL may be connected to a plurality of UPFs to implement service offloading. It should be understood that the BP/UL CL may be implemented by using the UPF.

The AF may be used to: select, reselect, locate, and relocate an AS of an application, and interact with a core network. During actual application, the AF may alternatively be a separate apparatus independent of the AS, or the AF may be co-located with the AS. This is not specifically limited in the present invention.

In FIG. 2, N1, N2, N3, N4, N5, N6, N7, N8, N9, N11, N15, and the like are interface sequence numbers. For meanings of these interface sequence numbers, refer to meanings defined in the 3GPP-related standard protocol. This is not limited herein.

As shown in FIG. 2, UE may access a DN through a PDU session managed by an SMF. FIG. 2 is used as an example. The UE may access, through one PDU session, a data network DN 1 connected to a UPF 1, to obtain data of an application server in the data network. In addition, the UE may access, through the same PDU session, a data network DN 2 connected to a UPF 2, to obtain data of an application server in the data network. The plurality of DNs shown in FIG. 2 may be understood as a local application server and an application server of a central data network shown in FIG. 1 respectively.

It should be understood that, for example, as shown in FIG. 2, if a second application server is deployed in the DN 1 and a UPF connected to a data network of the second application server is the UPF 1, the DN 2 in FIG. 2 may be a local data network, a first application server may be deployed in the DN 2 shown in FIG. 2, and a first user plane network element is the UPF 2.

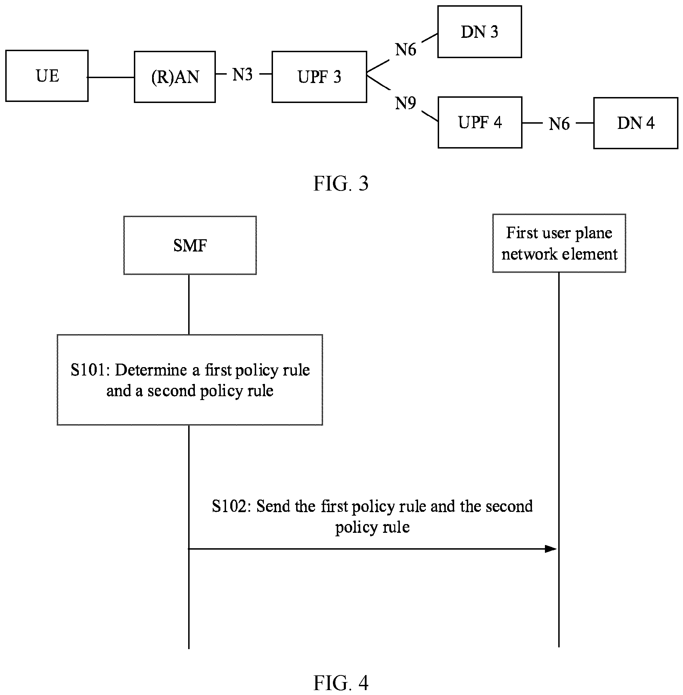

In addition, a local PSA and a BP/UL CL shown in FIG. 1 may alternatively be co-located. For example, as shown in FIG. 3, if a UPF connected to a data network DN 4 of the second application server is a UPF 4 and the first application server is deployed in a local data network DN 3, a device in which the local PSA and the BP/UL CL are co-located may include a UPF 3 shown in FIG. 3. In this example, the first user plane network element is the UPF 3.

The foregoing DN may be a network other than the carrier network, and the carrier network may access a plurality of DNs through UPFs. An application server may be deployed in the DN. Each application server may correspond to one or more services, and is used to provide services such as data and/or a voice for a terminal.

It should be understood that the DN in this application may be a local data network, for example, a data network deployed in a local area network such as an MEC environment. For example, the DN is a private network of a smart factory, a sensor installed in a workshop of the smart factory may be considered as a terminal, a control server of the sensor is deployed in the DN, and the control server may provide a service for the sensor or process data of the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be considered as a terminal, and the mobile phone or the computer of the employee may access information, data resources, and the like in the internal office network of the company, or a server deployed in the internal office network of the company may process data of the mobile phone or the computer of the employee.

In addition, in correspondence to the local data network, the DN may alternatively be a central DN. In this application, the central DN is a data network that is not deployed in the local area network. A service server provided by a service developer may be deployed in the central DN, for example, an application server provided by a software developer of a video type, a game type, or a social type, to provide a corresponding service for UE.

The user plane network element shown above is a gateway that is provided by the carrier and used for communication between the carrier network and the DN. The UPF network element may have functions related to a user plane, for example, packet routing and transmission, packet detection, service usage reporting, quality of service (quality of service, QoS) processing, lawful interception, uplink packet detection, and downlink packet storage. In 5G, the user plane network element may be a UPF. In future communication, for example, 6G, the user plane network element may still be a UPF or may have another name. This is not limited in this application.

The UE may be a device having a wireless transceiver function. The UE may be deployed on land, including an indoor device, an outdoor device, a handheld device, or a vehicle-mounted device, may be deployed on a water surface (for example, on a ship), or may be deployed in air (for example, in an aircraft, a balloon, and a satellite). The UE may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The UE shown in FIG. 3 may include a terminal 101.

The terminal may establish a connection to the carrier network through an interface (for example, N1) provided by the carrier network. The terminal may further access the carrier network through an access network element, to use services such as data and/or a voice provided by the carrier network. The terminal may further access the DN through the carrier network, and use a carrier service deployed in the DN and/or a service provided by a third party. The third party may be a service provider other than the carrier network and the terminal, and may provide services such as data and/or a voice for the terminal. A specific representation form of the third party may be specifically determined based on an actual application scenario, and is not limited herein.

An access network element (also referred to as an access network device) is a device that provides a wireless communication function for the terminal, and may be deployed in a RAN. The access network element includes but is not limited to a next-generation NodeB (gNodeB, gNB) in 5G, a home base station (for example, a home evolved NodeB, or a home NodeB, HNB), abaseband unit (baseband unit, BBU), a transmission reception point (transmitting and receiving point, TRP), a transmission point (transmitting point, TP), a mobile switching center, and the like.

Based on the architectures shown in FIG. 1 to FIG. 3, an embodiment of this application provides a communication method, to steer, to an application server in a data network or a terminal, a data flow that is newly initiated by a local application server deployed in a local data network, so that efficiency of a service data coordination processing process is improved.

First, network elements mentioned in the method provided in this embodiment of this application are described. For example, the method may be implemented by a session management network element, a first user plane network element, and a first application server. In addition, an implementation process of the method further relates to a second user plane network element and a second application server.

Both the first application server and the second application server correspond to a same application (where the application may be referred to as a first application below), the first application server is an application server whose first application is deployed in a local DN, the second application server is an application server whose first application is deployed in a central DN, and both the first application server and the second application server may be used to process data corresponding to the first application. Specifically, the first application server may be the first application server shown in FIG. 1, and the second application server may be the second application server shown in FIG. 1.

The first user plane network element may be configured to access the local DN of the first application server, and the second user plane network element may be configured to access the central DN of the second application server. For example, as shown in FIG. 1, the first user plane network element is the local PSA, and the second user plane network element is the central PSA.

As shown in FIG. 4, the communication method may include the following steps.

S101: An SMF determines a first policy rule and a second policy rule.

The first policy rule is used to indicate a first user plane network element to steer first data of a first application to a first application server. The first policy rule includes first indication information. The first indication information is used by the first user plane network element to determine to include second indication information in the first data, and the second indication information is used to indicate the first application server to include identification information of a first session in second data; and/or the first indication information is used by the first user plane network element to determine to include the identification information of the first session in the second data, and the identification information of the first session is used by the first application server to determine to include the identification information of the first session in the second data.

For example, the first session (which may be a PDU session) may be used to transmit data of the first application between a terminal and a second application server. The session management network element may be configured to create and manage the first session.

The second policy rule is used by the first user plane network element to determine to send the second data of the first application to a network element associated with the first session, the second data comes from the first application server, the second data includes an address of the first application server, and the second data includes the identification information of the first session. The network element associated with the first session may be configured to send the second data to the terminal or the second application server.

S102: The SMF sends the first policy rule and the second policy rule to the first user plane network element.

It should be understood that the first policy rule and the second policy rule may be separately sent or may be carried in a same message for sending. This is not specifically limited in this application.

Correspondingly, the first user plane network element receives the first policy rule and the second policy rule.

In the foregoing method, the session management network element may send the first policy rule and the first policy rule to the first user plane network element. Therefore, the first user plane network element performs the following actions according to the first policy rule: including the identification information of the first session or the second indication information in the first data of the first application, and sending the first data to the first application server. The first user plane network element performs the following actions according to the second policy rule: identifying the second data that carries the identification information of the first session and that is initiated by the first application server, and sending the second data to the network element associated with the first session, so as to send, through the first session, the second data to the network element associated with the first session. The network element associated with the first session may be configured to send the second data to the terminal or the second application server, so that a data flow newly initiated by a local application server is steered to an application server in a data network or the terminal.

The identification information of the first session may include an identifier allocated by the first user plane network element to the first session (for example, a generic routing encapsulation (generic routing encapsulation, GRE) key (key)) or address information of the first session. The address information of the first session may include an internet protocol (internet protocol, IP) address of the terminal, for example, an IPv4 address or an IPv6 address prefix (or an address corresponding to the IPv6 address prefix).

For example, the IP address of the terminal may be allocated by a network when the first session is established. In a process of establishing the first session, the network may further insert a BP/UL CL between an access network element (for example, a RAN) accessed by the terminal of the first session and a second user plane network element, and separately establish a tunnel between the terminal and the RAN, a tunnel between the RAN and the BP/UL CL, and a tunnel between the BP/UL CL and the second user plane network element. In this application, an endpoint at which a network element receives data may be represented by using an IP address and a tunnel endpoint identifier (tunnel endpoint identifier, TEID). Specifically, a receiving endpoint at which the second user plane network element receives uplink data sent by the BP/UL CL may be represented as (IP address1, TEID1) in this application.

For example, the SMF may determine that the data of the first application needs to be processed by the first application server and the first application server initiates a new data flow based on processed data. Specifically, after determining that the data of the first application needs to be processed by the first application server and the first application server initiates the new data flow based on the processed data, the SMF may perform the step shown in S101, that is, determine the first policy rule and the second policy rule. The SMF may further select the first user plane network element after determining that the data of the first application needs to be processed by the first application server and the first application server initiates the new data flow based on the processed data.

In a possible example, the SMF may receive an indication from a PCF, determine, based on the indication, that the data of the first application needs to be processed by the first application server and the first application server initiates the new data flow based on the processed data. An AF may determine that the data of the first application needs to be processed by the first application server and the first application server initiates the new data flow based on the processed data and sends the indication to the PCF, so that the PCF sends the indication to the SMF. Specifically, the indication may be a local termination indication. For example, the local termination indication may be used to indicate that a local application server of an application initiates a new service data flow after terminating a service data flow. It should be understood that the AF herein is an AF corresponding to the second application server in a central DN.

For example, the local termination indication may be carried in LAN traffic steering information (LAN traffic steering information) (also referred to as NEF LAN traffic steering information, N6 interface LAN traffic information, or the like) that is sent by the AF to the PCF. The LAN traffic steering information may carry the local termination indication and/or a part or all of information shown in Table 1. It should be understood that, when the LAN traffic steering information does not carry the local termination indication, the PCF may determine, based on a decision of the PCF (for example, based on information about the first application), that the data of the first application needs to be processed by the first application server and the first application server initiates the new data flow based on the processed data. Alternatively, the PCF may obtain indication information in a manner other than the LAN traffic steering information, to learn that the data of the first application needs to be processed by the first application server and the first application server initiates the new data flow based on the processed data.

**Table 1**

| Parameters | Meanings |
|---|---|
| Information used to identify data | For example, a triplet of application data and an application identifier |
| Spatial validity condition | Indicates a spatial location of a terminal using LAN traffic steering information |
| Temporal validity condition | Indicates time for using the LAN traffic steering information and is usually a time interval |

| Information (also referred to as an information list) that may be included for each local application | |
|---|---|
| Direction information | Indicates a direction of a service data flow for which the LAN traffic steering information is used, for example, an uplink direction (where this parameter may be omitted if the "information used to identify data" can uniquely indicate a service data flow in the uplink direction) |
| Sequence information | Indicates a sequence in which a local application processes the service data flow (where this parameter may not be carried when there is only one local application) |
| Local area network access identifier (LAN access identifier, | Indicates a user-plane access identifier for accessing a LAN in which the local application is deployed, where this may be a LANAI list if the local |

| Parameters | Meanings |
|---|---|
| LANAI) | application is deployed in a plurality of LANs, and this is mandatory |
| Traffic steering profile identifier (traffic steering profile ID) | Corresponds to a LAN traffic steering policy configured on a UPF, where this is mandatory |
| Notification information | Indicates that a notification message needs to be sent before/after LAN traffic steering is performed |

For example, after receiving the LAN traffic steering information, the PCF may formulate a policy and charging control (policy and charging control, PCC) rule based on the LAN traffic steering information, and send the rule to the SMF. The PCC rule may include the local termination indication and/or the LAN traffic steering information, and the LAN traffic steering information may include a part or all of information shown in Table 2. It should be understood that, when the LAN traffic steering information does not carry the local termination indication, the SMF may determine, based on a decision of the SMF (for example, based on information about the first application), that the data of the first application needs to be processed by the first application server and the first application server initiates the new data flow based on the processed data. Alternatively, the SMF may obtain indication information in a manner other than the LAN traffic steering information, to learn that the data of the first application needs to be processed by the first application server and the first application server initiates the new data flow based on the processed data.

**Table 2**

| Information | Meanings |
|---|---|
| Information used to identify data | For example, a triplet of application data and an application identifier |

| Information (also referred to as an information list) that may be included for each local application | |
|---|---|
| Direction information | Indicates a direction of a service data flow for which the LAN traffic steering information is used, for example, an uplink direction (where this parameter may be omitted if the "information used to identify data" can uniquely indicate a service data flow in the uplink direction) |
| Sequence information | Indicates a sequence in which a local application processes the service data flow (where this parameter may not be carried when there is only one local application) |
| Local area network access identifier | Indicates a user-plane access identifier for accessing a LAN in which the local application is deployed, where this may be a LANAI list if the local application is deployed in a plurality of LANs, and this is mandatory |

| Information | Meanings |
|---|---|
| Traffic steering policy identifier (traffic steering policy ID) | Corresponds to a LAN traffic steering policy configured on a UPF, where a PCF maps a traffic steering profile identifier provided by an AF to the traffic steering policy identifier, and this is mandatory |
| Notification information | Indicates that a notification message needs to be sent before/after LAN traffic steering is performed |

After receiving the PCC rule from the PCF, the SMF may select the first user plane network element according to the PCC rule. Specifically, after receiving the PCC rule, the SMF determines, based on the local termination indication, that the data of the first application needs to be processed by the first application server and the first application server initiates the new data flow based on the processed data. Then, the SMF may select the first user plane network element based on the local area network access identifier carried in the PCC rule, and determine the first policy rule and the second policy rule.

When selecting the first user plane network element, the SMF may consider a current location of the terminal, select a user plane network element supporting the LANAI as the first user plane network element, and insert a BP/UL CL into the first session based on a requirement, to be separately connected to the first application server and the second application server through the BP/UL CL. In addition, the SMF may further select the first user plane network element in consideration of a location of the second user plane network element, to avoid route recurvation.

It should be understood that, if the LAN traffic steering information carries information corresponding to only one local application, only one user plane network element needs to be selected as the first user plane network element. If the LAN traffic steering information carries information corresponding to a plurality of local applications, the SMF may select a plurality of first user plane network elements, and needs to separately insert the plurality of first user plane network elements or BPs/UL CLs connected to the first user plane network elements into the first session in sequence.

If a BP is inserted between a first SMF and a second SMF, the SMF may allocate a second IPv6 address prefix to the terminal, and indicate the terminal to use an IPv6 address corresponding to the second IPv6 address prefix when the terminal accesses the first application. It should be understood that the second IPv6 address prefix is different from a first IPv6 address prefix that is allocated by the network to the terminal when the terminal establishes the first session. The SMF may indicate, according to a routing rule, the terminal to use the IPv6 address corresponding to the IPv6 address prefix when the terminal accesses the first application. In this case, the SMF may modify a data flow policy rule of the BP, so that the BP detects a data flow whose source address is the address corresponding to the second IPv6 address prefix, and steers the data flow to the first application server. A receiving endpoint, of the first application server, for receiving a data packet may be represented as (IP address2, TEID2) in this application.

If a UL CL is inserted between the first user plane network element and the second user plane network element, the SMF may modify a data flow policy rule of the UL CL, so that the UL CL detects a data flow whose source address is an IPv4 address of the terminal, and sends the data flow to the first application server.

In addition, the SMF may further indicate the BP/UL CL to send uplink data from the first user plane network element to the second user plane network element. A receiving endpoint, of the second user plane network element, for receiving data from the first user plane network element may be represented as (IP address3, TEID3) in this application. To be specific, for the BP/UL CL, data received by the receiving endpoint (IP address3, TEID3) needs to be sent to the receiving endpoint (IP address 1, TEID1) of the second application server.

For example, after selecting the first user plane network element, the SMF may send the first policy rule and the second policy rule to the first user plane network element.

Specifically, the first policy rule and the second policy rule may separately include a packet detection rule (packet detection rule, PDR) and a forwarding action rule (forwarding action rule, FAR). The PDR is used to indicate a specific rule used by the first user plane network element to detect a data flow. The FAR is used to indicate specific processing to be performed by the first user plane network element on a detected data flow.

According to the communication method provided in this embodiment of this application, the PDR (which may be referred to as a PDR#1 below) of the first policy rule may be used to indicate the first user plane network element to detect the first data. The FAR (which may be referred to as a FAR#1 below) of the first policy rule may be used to indicate the first user plane network element to steer the first data to the first application server. In addition, the FAR#1 may further carry the first indication information, to indicate the first user plane network element to include the second indication information and/or the identification information of the first session in the second data.

For example, packet detection information (packet detection information, PDI) carried in the PDR#1 may be that shown in Table 3.

**Table 3**

| Parameters | Values | Descriptions |
|---|---|---|
| Source interface (source interface) | Access: indicates an uplink data direction | This parameter is mandatory |
| Fully qualified tunnel endpoint identifier | Includes an IP address2 and a TEID2 (used to indicate an endpoint, of a first user plane network | This parameter is mandatory when a traffic |
| (full TEID, F-TEID) | element, for receiving data sent by a BP/UL CL) | endpoint identifier is not included |
| IP address of a terminal | If a BP is inserted, a second IPv6 address prefix (or an address corresponding to the second IPv6 address prefix) of the terminal should be carried; if the BP is inserted, an IPv4 address of the terminal should be carried | This parameter is mandatory when the traffic endpoint identifier is not included |
| Traffic endpoint identifier (traffic endpoint ID) | Identifies a traffic endpoint, including an IPaddress 1, a TEID1, and the IP address of the terminal (the second IPv6 address prefix or the IPv4 address of the terminal) | This is optional; and this parameter is carried when PDI optimization is supported |
| Application identifier (application ID) | An application identifier of an application accessed by the terminal (for example, an identifier of a first application in this application) | Determined based on information used to identify data |
| Synchronous data flow (synchronous data flow, SDF) filter (filter) | A triplet of the application accessed by the terminal | Determined based on the information used to identify data |

For example, content carried in the FAR#1 may be that shown in Table 4.

**Table 4**

| Parameters | Values/Meanings |
|---|---|
| Apply action (Apply Action) | Data packet forwarding |
| Forwarding parameters (Forwarding Parameters) | A destination interface (destination interface) is a LAN or an intermediate LAN. A forwarding policy (forwarding policy) includes a traffic steering policy identifier and identification information of a first session. For the intermediate LAN, after data is sent to the LAN, the data is returned. |
| | After executing a local policy corresponding to the traffic steering policy identifier, a first user plane network element sends a data packet to the LAN, and includes, in the data packet, the identification information of the first session or an indication (namely, second indication information) for inserting the identification information of the first session. The identification information of the first session may be a second IPv6 address prefix of a terminal, an address corresponding to the second IPv6 address prefix, or an IPv4 address of the terminal. |
| | An SMF determines, based on a local termination indication of an application or an application identifier in a PCC rule, that the forwarding parameters carry the identification |
| | information of the first session or an indication (namely, first indication information) for inserting the identification information of the first session. If the identifier information of the first session is carried, the first user plane network element may encapsulate the identifier information of the first session into a data packet header (where the identification information of the first session is the second IPv6 address prefix/the address corresponding to the second IPv6 address prefix/the IPv4 address); if the first indication information is carried, the first user plane network element may encapsulate a source address (namely, the second IPv6 address prefix of the terminal or the IPv4 address of the terminal) of the data packet into a data packet header, encapsulate a session identifier (for example, a GRE Key) allocated by the first user plane network element, or encapsulate the second indication information. |

The PDR (which may be referred to as a PDR#2 below) of the second policy rule may be used to indicate the first user plane network element to detect a source of data, indicate whether the data carries the address of the first application server, and indicate whether the data carries the identification information of the first session. If all of the foregoing conditions are met, the data flow is the second data. The FAR (which may be referred to as a FAR#2 below) of the second policy rule may be used to indicate the first user plane network element to steer the second data to the network element associated with the first session. Specifically, the network element associated with the first session may include the RAN accessed by the terminal or the second user plane network element. Alternatively, the network element associated with the first session may include the BP/UL CL, and the BP/UL CL is used to send the first data to the first user plane network element.

For example, PDI carried in the PDR#2 may be that shown in Table 5.

**Table 5**

| Parameters | Values | Descriptions |
|---|---|---|
| Source endpoint | A LAN or an intermediate LAN, indicating that data comes from a LAN of a first application server | Mandatory |
| Session identifier information | For example, a second IPv6 address prefix of a terminal (or an address corresponding to the second IPv6 address prefix), an IPv4 address of the terminal, or a session identifier allocated by a first user plane network element | Mandatory |
| Application identifier | An application identifier (for example, an identifier of a first application) corresponding to an application accessed by the terminal | Based on information used to identify data |

For example, content carried in the FAR#2 may be that shown in Table 6.

**Table 6**

| Parameters | Values |
|---|---|
| Apply action | Data packet forwarding |
| Forwarding parameters | A destination identifier identifies a core network, outer header creation (outer header creation) of a data packet includes an F-TEID, and the F-TEID includes an IP address3 and a TEID3. It indicates that a general packet radio service (general packet radio service, GPRS) tunnel protocol (GPRS tunnel protocol, GTP)-U is used to perform packet header encapsulation and send the data packet to a BP/UL CL (where a receiving endpoint, of the BP/UL CL, for receiving data of a first user plane network element is (IP address3, TEID3)). |

The following uses uplink data transmission of a first application as an example to describe, by using a flowchart, an example of an implementation procedure of a communication method provided in an embodiment of this application.

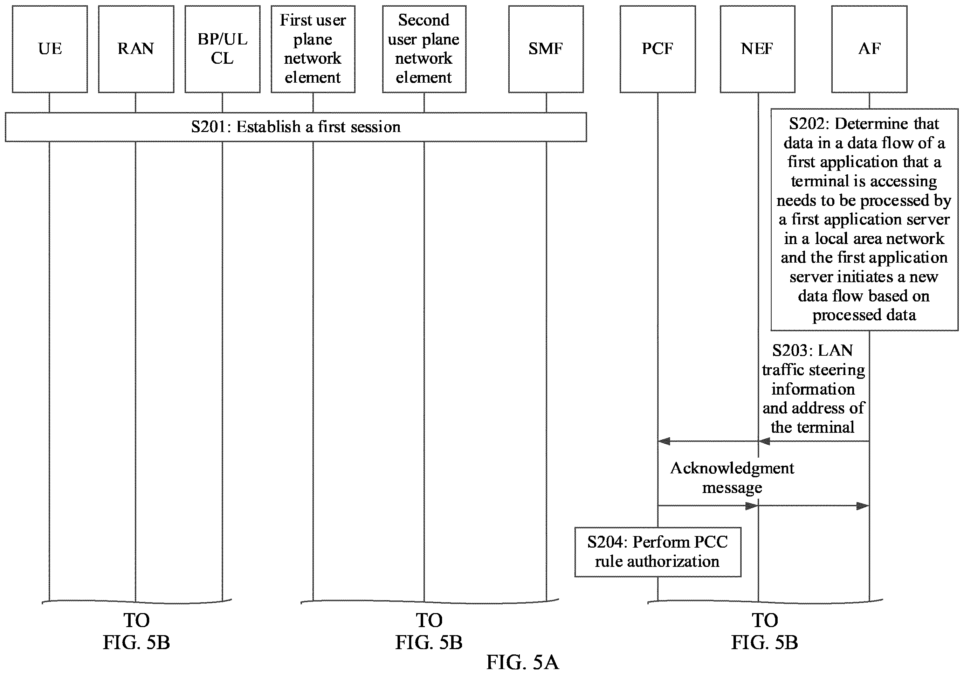

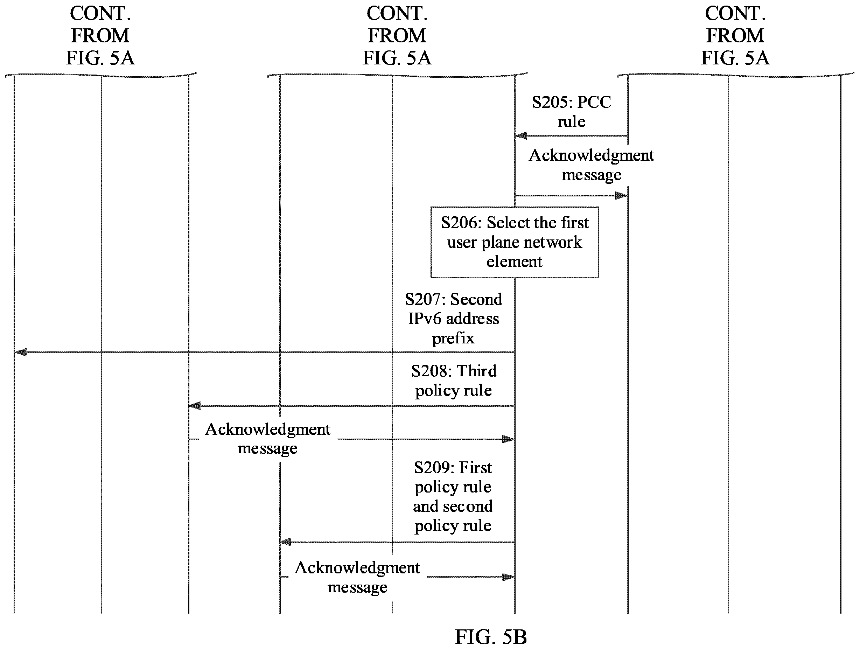

If a network identifies, after a first session is established, that data of a first application needs to be processed by a local application server, the communication method provided in this embodiment of this application may include the following steps shown in FIG. 5A and FIG. 5B.

S201: Establish the first session.

A process of establishing the first session may be initiated by UE. Specifically, the process of establishing the first session may relate to the following operation: The network selects a second user plane network element as a PSA. An IP address allocated by the network to the terminal is denoted as an Addrl (which may be a first IPv6 prefix or an IPv4 address). The terminal accesses, through the first session, a second application server of a central DN corresponding to the first application. The network inserts a BP/UL CL between a RAN accessed by the terminal and the second user plane network element. The network separately establishes a tunnel between the terminal and the RAN, a tunnel between the RAN and the BP/UL CL, and a tunnel between the BU/UL CL and the second user plane network element. A receiving endpoint, of the second user plane network element, for receiving uplink data sent by the BP/UL CL is (IP address1, TEID1).

S202: An AF determines that data in a data flow of the first application that the terminal is accessing needs to be processed by a first application server in a local area network and the first application server initiates a new data flow based on processed data.

S203: The AF sends LAN traffic steering information and the address Addrl of the terminal to a PCF.

The LAN traffic steering information may carry a local termination indication and/or a part or all of the information shown in Table 1, to indicate that the data in the data flow of the first application needs to be processed by the first application server in the local area network and the first application server initiates the new data flow based on the processed data.

Specifically, the LAN traffic steering information may be carried in a policy authorization create (Npcf_PolicyAuthorization_Create) request message that is sent by the AF to the PCF.

In an implementation, the policy authorization create request message may be directly sent by the AF to the PCF, or sent by the AF to a NEF and then forwarded by the NEF to the PCF.

Correspondingly, the PCF receives the LAN traffic steering information, and sends an acknowledgment message (also referred to as an answer message or a response message) to the AF.

S204: The PCF performs PCC rule authorization based on the LAN traffic steering information, and formulates a PCC rule.

When the LAN traffic steering information includes a spatial validity condition and/or a temporal validity condition, PCC authorization is performed only when these conditions are met.

For example, the PCF may include the LAN traffic steering information in the PCC rule, and the LAN traffic steering information carried in the PCC rule includes the local termination indication and/or a part or all of the information shown in Table 2.

S205: The PCF sends the PCC rule to an SMF.

Correspondingly, the SMF receives the PCC rule, and sends an acknowledgment message to the PCF after the PCC rule is installed.

S206: The SMF selects a first user plane network element based on the LAN traffic steering information in the PCC rule.

For a manner of selecting the first user plane network element, refer to the foregoing descriptions of selecting the first user plane network element. Details are not described herein again.

It should be understood that the SMF may further determine, based on "information used to identify data" or "direction information" in the LAN traffic steering information, that a data flow transmitted through the first session includes an uplink data flow, to formulate a steering rule for uplink data of the first application.

S207: If a BP is inserted between the RAN and the second user plane network element, the SMF may further allocate a second IPv6 address prefix to the terminal, and send a routing rule to the terminal, to indicate the terminal to access the first application by using the second IPv6 address prefix. If a UL CL is inserted between the RAN and the second user plane network element, this step does not need to be performed.

S208: The SMF sends an N4 session modification request to the BP/UL CL, where the N4 session modification request carries a third policy rule.

The third policy rule is used to indicate the BP/UL CL to send the first data to the first user plane network element. The first data is uplink data of the first application. For the BP, the third policy rule may be used to indicate the BP to identify data of the first application whose source address is an address corresponding to the second IPv6 address prefix as the first data, and the third policy rule may be used to indicate the BP to send the first data to an endpoint (IP address2, TEID2) of the first user plane network element. For the UL CL, the third policy rule may be used to indicate the UL CL to identify a data packet corresponding to an application identifier or a triplet of an application in the "information used to identify data" as the first data, and the third policy rule may be used to indicate the BP to send the first data to the endpoint (IP address2, TEID2) of the first user plane network element.

In addition, the third policy rule may be further used to indicate the BP/UL CL to send data from the first user plane network element to a receiving endpoint (IP address1, TEID1) of the second user plane network element. It should be understood that the SMF may alternatively send a fourth policy rule to the BP/UL CL, and the fourth policy rule indicates the BP/UL CL to send the data from the first user plane network element to the receiving endpoint (IP address1, TEID1) of the second user plane network element.

Correspondingly, after receiving the policy rule from the SMF, the BP/UL CL may send an acknowledgment message to the SMF.

S209: The SMF sends an N4 session establishment request message to the first user plane network element, where the N4 session establishment request message carries the first policy rule and the second policy rule.

Specifically, the first policy rule may carry a PDR#1 and a FAR#1, PDI carried in the PDR#1 may be that shown in Table 3, and content carried in the FAR#1 may be that shown in Table 4. The second policy rule may carry a PDR#2 and a FAR#2, PDI carried in the PDR#2 may be that shown in Table 5, and content carried in the FAR#2 may be that shown in Table 6.

Correspondingly, after receiving the first policy rule and the second policy rule, the first user plane network element may send an acknowledgment message to the SMF.

According to the foregoing procedure, during data transmission, the terminal initiates interaction with a local application by using an IPv6 address constructed by the second IPv6 prefix or the IPv4 address, the data packet is sent by the BP/UL CL to the first user plane network element, and the first user plane network element matches the first data according to the PDR#1 and performs the FAR#1. According to the FAR#1, the first user plane network element performs a service steering policy corresponding to a traffic steering policy identifier, encapsulates identification information of the first session (or second indication information) into a data packet header, and steers the first data to the first application server. After receiving the first data forwarded by the first user plane network element, the first application server processes the data packet and then initiates interaction with the second application server. The first application server initiates a new data flow (namely, second data) by using an address of the first application server, and includes the identification information of the first session in the second data based on the identification information of the first session (or the second indication information). The first application server encapsulates the identification information of the first session into a data packet header of the second data. The first user plane network element sends a data packet of the second data to a data receiving endpoint (IP address3, TEID3) of the BP/UL CL based on the identification information of the first session. Further, the BP/UL CL sends the data to the receiving endpoint (IP address1, TEID1) of the second user plane network element, and then forwards the data to the second application server. According to the foregoing procedure, the first user plane network element may associate the data packet sent by the local application server with the first session of the terminal, so that the data can be forwarded to the second application server.

In addition, for downlink data, a similar implementation may be used. Specifically, the first data initiated by the second application server is sent to the BP/UL CL, and the BP/UL CL may identify, based on a destination identifier of the first data and an application identifier, the data as data sent to the first application of the terminal, and send a data packet of the first data to the first user plane network element. The first user plane network element matches the first data according to the PDR#1, and performs the FAR#1. According to the FAR#1, the first user plane network element performs a service steering policy corresponding to a traffic steering policy identifier, encapsulates identification information of the first session (or second indication information) into a data packet header, and steers the first data to the first application server. After receiving the first data forwarded by the first user plane network element, the first application server processes the data packet and then initiates interaction with the second application server. The first application server initiates a new data flow (namely, second data) by using an address of the first application server, and includes the identification information of the first session in the second data. The first user plane network element sends, based on the identification information of the first session, a data packet of the second data to a data receiving endpoint of a RAN accessed by the terminal. Further, the BP/UL CL sends the data to the receiving endpoint of the RAN. Subsequently, the RAN may send the data to the terminal. According to the foregoing procedure, the first user plane network element may associate the data packet sent by the local application server with the first session of the terminal, so that the data can be forwarded to the terminal.

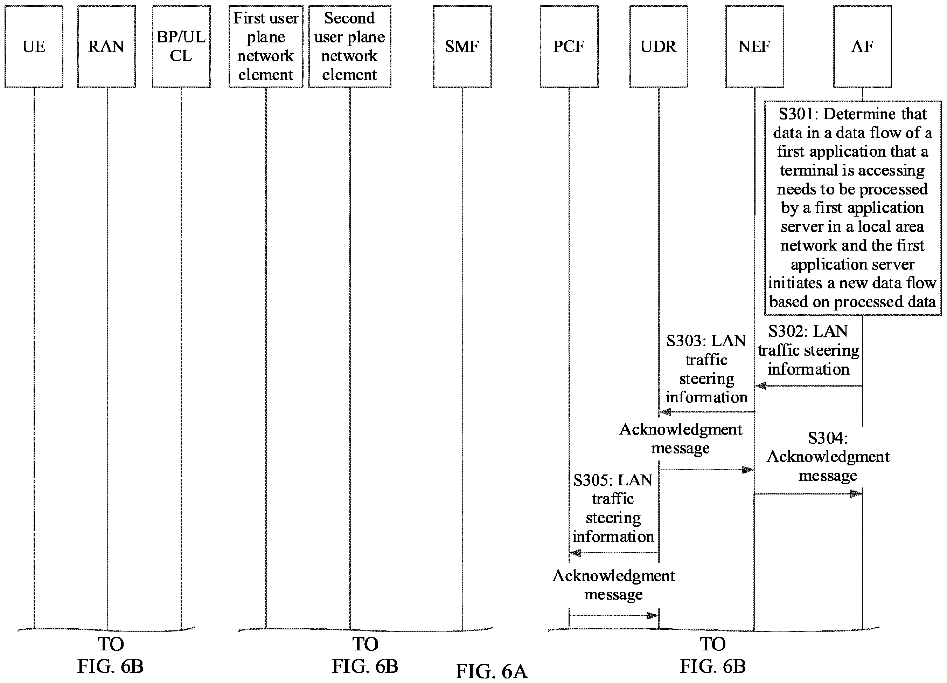

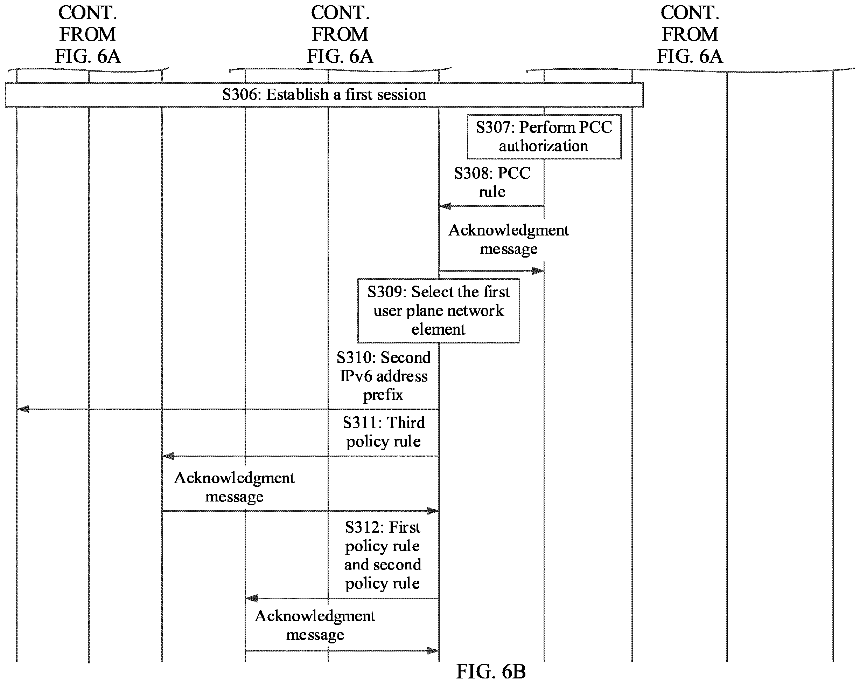

If a network has identified, before a first session is established, that data of a first application needs to be processed by a local application server (or in other words, the first session is not limited to an established session, and it may be understood that this application may be performed for any session of the first application of a terminal), a communication method provided in an embodiment of this application may include the following steps shown in FIG. 6A and FIG. 6B.

S301: An AF determines that data in a data flow of the first application that the terminal is accessing needs to be processed by a first application server in a local area network and the first application server initiates a new data flow based on processed data.

For example, the first application server is deployed in a LAN of MEC.

S302: The AF sends LAN traffic steering information to a NEF.

The LAN traffic steering information carries an external group identifier (external group ID) of the terminal. The NEF may map the external group identifier to an internal group identifier (internal group ID), and include the internal group identifier in the LAN traffic steering information sent to a PCF. In addition, the LAN traffic steering information may further carry a local termination indication and/or a part or all of the information shown in Table 1, to indicate that the data in the data flow of the first application needs to be processed by the first application server in the local area network and the first application server initiates the new data flow based on the processed data.

Specifically, the LAN traffic steering information may be carried in a traffic influence create (Nnef_TrafficInfluence_Create) request message that is sent by the AF to the NEF.

S303: The NEF sends the LAN traffic steering information to a unified data repository (unified data repository, UDR), to store the LAN traffic steering information into the UDR.

Specifically, the LAN traffic steering information may be carried in a data management create (NudrDM Create) request message that is sent by the NEF to the UDR.

Correspondingly, after storing the LAN traffic steering information, the UDR sends an acknowledgment message to the NEF.

S304: The NEF sends an acknowledgment message to the AF.

S305: The UDR sends the LAN traffic steering information to the PCF that has subscribed to a change notification of the LAN traffic steering information.

The PCF may subscribe to the change notification of the LAN traffic steering information from the UDR, to learn that the LAN traffic steering information stored by the UDR changes.

Specifically, the LAN traffic steering information may be carried in a data management notification (Nudr_DM_Notify) request message that is sent by the UDR to the PCF.

Correspondingly, after receiving and storing the LAN traffic steering information, the PCF sends an acknowledgment message to the UDR.

S306: Establish the first session.

A process of establishing the first session may be initiated by the UE. The process of establishing the first session may relate to the following operation: The network selects a second user plane network element as a PSA. An IP address allocated by the network to the terminal is denoted as an Addrl (which may be a first IPv6 prefix or an IPv4 address). The terminal accesses, through the first session, a second application server of a central DN corresponding to the first application. The network inserts a BP/UL CL between a RAN accessed by the terminal and the second user plane network element. The network separately establishes a tunnel between the terminal and the RAN, a tunnel between the RAN and the BP/UL CL, and a tunnel between the BU/UL CL and the second user plane network element. A receiving endpoint, of the second user plane network element, for receiving uplink data sent by the BP/UL CL is (IP address1, TEID1).

In addition, during establishment of the first session, an SMF may establish session management policy association (SM policy association) with the PCF, and the PCF obtains an internal group identifier of a group (group) to which the terminal belongs. The PCF may further interact with the UDR to obtain subscription information of the terminal.

S307: The PCF performs PCC rule authorization based on the LAN traffic steering information, and formulates a PCC rule.

For example, after identifying that the LAN traffic steering information is applicable to the terminal corresponding to the first session, the PCF may perform PCC rule authorization.

Specifically, if the PCF obtains the internal group identifier of the terminal, after determining that the internal group identifier of the terminal is included in the internal group identifier carried in the LAN traffic steering information, the PCF may determine that the LAN traffic steering information is applicable to the terminal corresponding to the first session. Alternatively, if the LAN traffic steering information is applicable to all terminals, the PCF may determine that the LAN traffic steering information is applicable to the terminal corresponding to the first session.

In addition, when the LAN traffic steering information includes a spatial validity condition and/or a temporal validity condition, PCC authorization is performed only when these conditions are met.

For example, the PCF may include the LAN traffic steering information in the PCC rule, and the LAN traffic steering information carried in the PCC rule includes the local termination indication and/or a part or all of the information shown in Table 2.

S308: The PCF sends the PCC rule to the SMF.

Correspondingly, the SMF receives the PCC rule, and sends an acknowledgment message to the PCF after the PCC rule is installed.

S309: The SMF selects a first user plane network element based on the LAN traffic steering information in the PCC rule.

For a manner of selecting the first user plane network element, refer to the foregoing descriptions of selecting the first user plane network element. Details are not described herein again.

It should be understood that the SMF may further determine, based on "information used to identify data" or "direction information", that a data flow transmitted through the first session includes an uplink data flow, to formulate a steering rule for uplink data of the first application.

S310: If a BP is inserted between the RAN and the second user plane network element, the SMF may further allocate a second IPv6 address prefix to the terminal, and send a routing rule to the terminal, to indicate the terminal to access the first application by using the second IPv6 address prefix. If a UL CL is inserted between the RAN and the second user plane network element, this step does not need to be performed.

S311: The SMF sends an N4 session modification request to the BP/UL CL, where the N4 session modification request carries a third policy rule.

The third policy rule is used to indicate the BP/UL CL to send the first data to the first user plane network element. The first data is uplink data of the first application. For the BP, the third policy rule may be used to indicate the BP to identify data of the first application whose source address is an address corresponding to the second IPv6 address prefix as the first data, and the third policy rule may be used to indicate the BP to send the first data to an endpoint (IP address2, TEID2) of the first user plane network element. For the UL CL, the third policy rule may be used to indicate the UL CL to identify a data packet corresponding to an application identifier or a triplet of an application in the "information used to identify data" as the first data, and the third policy rule may be used to indicate the BP to send the first data to the endpoint (IP address2, TEID2) of the first user plane network element.

In addition, the third policy rule may be further used to indicate the BP/UL CL to send data from the first user plane network element to a receiving endpoint (IP address1, TEID1) of the second user plane network element. It should be understood that the SMF may alternatively send a fourth policy rule to the BP/UL CL, and the fourth policy rule indicates the BP/UL CL to send the data from the first user plane network element to the receiving endpoint (IP address1, TEID1) of the second user plane network element.

Correspondingly, after receiving the policy rule from the SMF, the BP/UL CL may send an acknowledgment message to the SMF.

S312: The SMF sends an N4 session establishment request to the first user plane network element, where the N4 session establishment request carries the first policy rule and the second policy rule.

Specifically, the first policy rule may carry a PDR#1 and a FAR#1, PDI carried in the PDR#1 may be that shown in Table 3, and content carried in the FAR#1 may be that shown in Table 4. The second policy rule may carry a PDR#2 and a FAR#2, PDI carried in the PDR#2 may be that shown in Table 5, and content carried in the FAR#2 may be that shown in Table 6.

Correspondingly, after receiving the first policy rule and the second policy rule, the first user plane network element may send an acknowledgment message to the SMF.

According to the foregoing procedure, the first user plane network element may associate the data packet sent by the local application server with the first session of the terminal, so that the processed data can be forwarded to the second application server. Similarly, a downlink data transmission procedure may be implemented in a similar manner with reference to the foregoing procedure. Details are not described herein again.

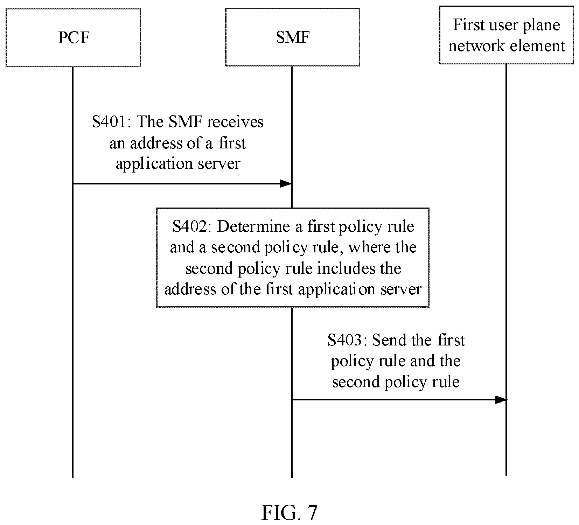

Based on the architectures shown in FIG. 1 to FIG. 3, another communication method provided in an embodiment of this application may include the following steps shown in FIG. 7.

S401: An SMF receives an address of a first application server from a PCF.

S402: The SMF determines a first policy rule and a second policy rule.

The first policy rule is used to indicate a first user plane network element to steer first data of a first application to the first application server. The first policy rule is used to indicate the first user plane network element to steer the first data of the first application to the first application server.

The second policy rule includes the address of the first application server, and the address of the first application server is used by the first user plane network element to determine to send second data to a network element associated with a first session, or in other words, the address of the first application server is used by the first user plane network element to determine to send, to the network element associated with the first session, the second data that carries the address of the first application server. The first session is used to transmit data of the first application between a terminal and a second application server. The second data comes from the first application server, and the second data includes the address of the first application server.

S403: The SMF sends the first policy rule and the second policy rule to the first user plane network element.

Correspondingly, the first user plane network element receives the first policy rule and the second policy rule.

According to the foregoing method, the first user plane network element may identify, according to the second policy rule, the second data that comes from the first application server and that carries the address of the first application server, and the first user plane network element may send, according to the second policy rule, the identified second data to the network element associated with the first session, so as to send the second data to the terminal or the second application server through the first session.

For example, the address of the first application server may include an IP address used by the first application server to interact with the second application server in a central DN.

For example, the PCF may receive the address of the first application server from an AF 1, and send the address of the first application server to the SMF after identifying that both the second application server of the first session and the first application server correspond to the first application. It should be understood that the AF 1 herein is an AF corresponding to the first application server.

Specifically, the terminal may initiate access to the first application server based on an address corresponding to a second IPv6 address prefix or an IPv4 address of the terminal, so that the AF 1 may obtain an address of the terminal (namely, the address corresponding to the second IPv6 address prefix of the terminal or the IPv4 address of the terminal).

For example, the AF 1 may send an authorization request of a PCC rule to the PCF, where the authorization request carries the address of the first application server, the address of the terminal, service request information, and the like. The service request information may include information such as 5-tuple information exchanged between the terminal and the first application server, QoS request information, and an AF application identifier (AF app ID). The PCF may compare the address of the terminal carried in the authorization request with an address of the terminal of the first session, associate the authorization request with the first session, and determine the PCC rule and association information of the first session. Then, the PCF may send the association information of the first session and the PCC rule to the SMF. The association information of the first session may include a correspondence among the address of the terminal, the address of the first application server, and an identifier of the first application, so that the SMF may obtain the address of the first application server. The PCC rule may be determined based on the service request information.

In addition, after the first session is established, an AF 2 may send the address of the terminal and an indication to the PCF after determining that data in a data flow of the first application that the terminal is accessing needs to be processed by the first application server in a local area network and the first application server initiates a new data flow based on processed data. The indication may be used to indicate that the data in the data flow of the first application needs to be processed by the first application server in the local area network and the first application server initiates the new data flow based on the processed data. The indication may be a local termination indication. For a manner of sending the indication, refer to the descriptions of sending the local steer indication in this application. Details are not described herein again. The AF 2 may be an AF corresponding to the second application server.

During implementation of S402, the first policy rule may include a PDR#3 and a FAR#3. The PDR#3 may be used to indicate the first user plane network element to detect the first data. The FAR#3 may be used to indicate the first user plane network element to steer the first data to the first application server.

For example, for PDI carried in the PDR#3, refer to Table 3. Content carried in the FAR#3 is that shown in Table 7.

**Table 7**

| Parameters | Values/Meanings |
|---|---|
| Apply action | Data packet forwarding |
| Forwarding parameters | A destination interface is a LAN or an intermediate LAN. A forwarding policy includes a traffic steering policy identifier. After executing a local policy corresponding to the traffic steering policy identifier, a first user plane network element sends a data packet to the LAN. |

The second policy rule may include a PDR#4 and a FAR#4. The PDR#4 may be used to indicate the first user plane network element to identify the second data that comes from the first application server and that carries the address of the first application server. The FAR#4 may be used to indicate the first user plane network element to send the second data to the network element associated with the first session. Specifically, the network element associated with the first session may include a RAN accessed by the terminal or a second user plane network element.

For example, for PDI carried in the PDR#4, refer to Table 8.

**Table 8**

| Parameters | Values | Descriptions |
|---|---|---|
| Source endpoint | A LAN or an intermediate LAN, indicating that data comes from a LAN of a first application server | Mandatory |
| address of a terminal | An address of the first application server is carried herein | Mandatory |
| Application identifier | An application identifier (for example, an identifier of a first application) corresponding to an application accessed by the terminal | Based on information used to identify data |

For example, for content carried in the FAR#4, refer to Table 6.

The following uses uplink data transmission of a first application as an example to describe, by using a flowchart, an example of an implementation procedure of a communication method provided in an embodiment of this application.

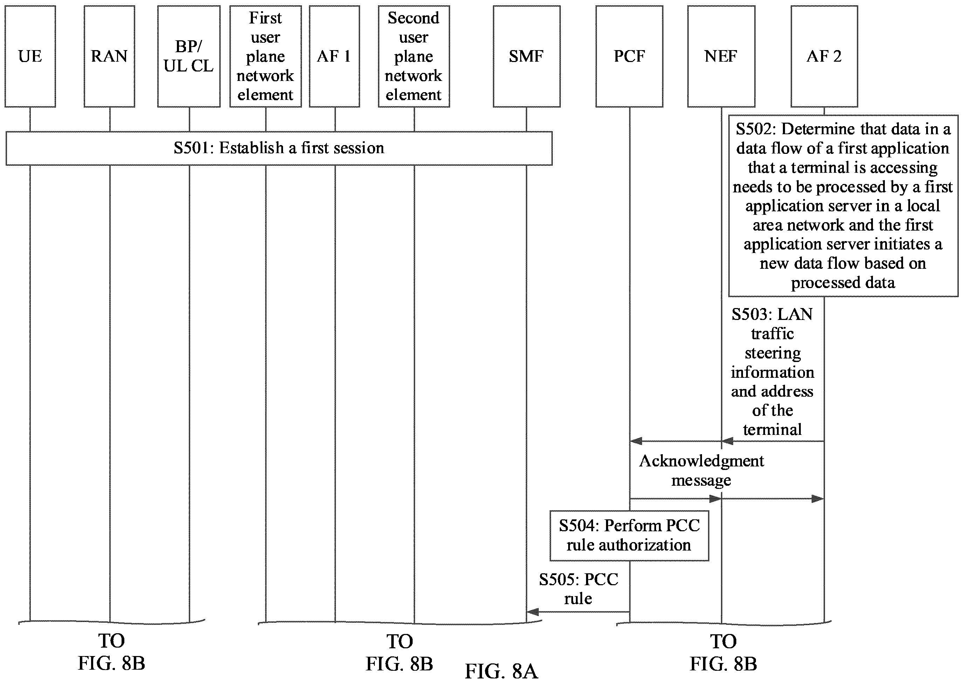

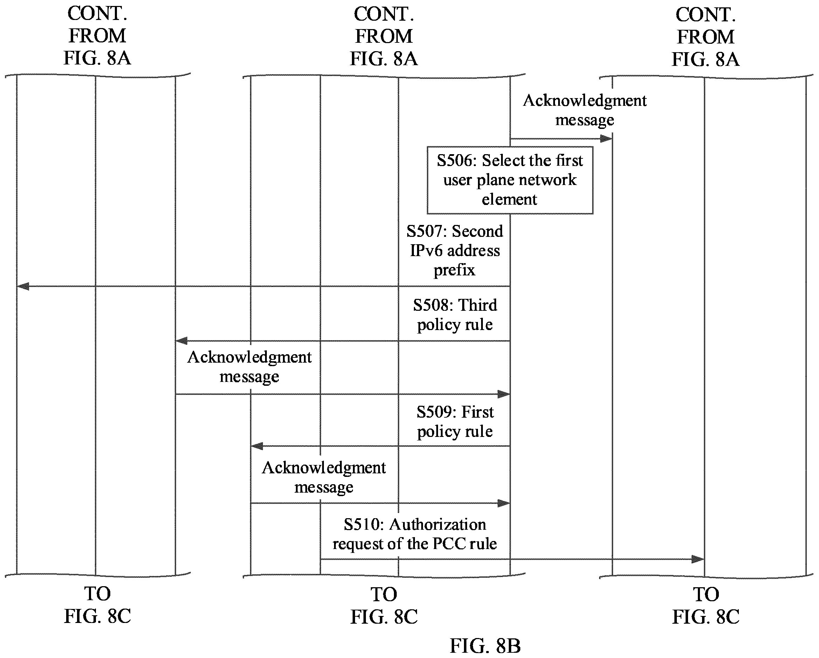

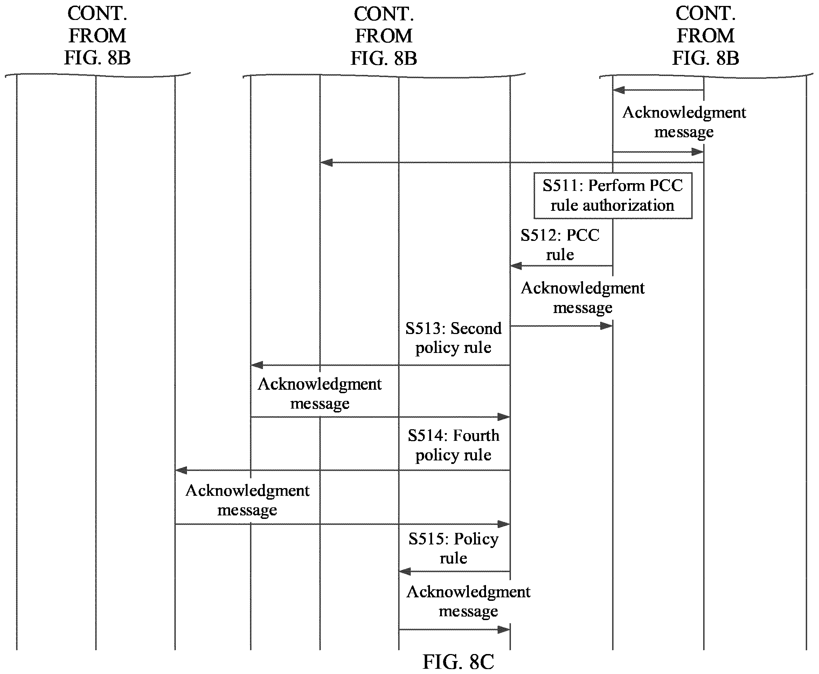

If a network identifies, after a first session is established, that data of a first application needs to be processed by a local application server, the communication method provided in this embodiment of this application may include the following steps shown in FIG. 8A, FIG. 8B, and FIG. 8C.

S501: Establish the first session.

A process of establishing the first session may be initiated by UE. Specifically, the process of establishing the first session may relate to the following operation: The network selects a second user plane network element as a PSA. An IP address allocated by the network to the terminal is denoted as an Addrl (which may be a first IPv6 prefix or an IPv4 address). The terminal accesses, through the first session, a second application server of a central DN corresponding to the first application. The network inserts a BP/UL CL between a RAN accessed by the terminal and the second user plane network element. The network separately establishes a tunnel between the terminal and the RAN, a tunnel between the RAN and the BP/UL CL, and a tunnel between the BU/UL CL and the second user plane network element. A receiving endpoint, of the second user plane network element, for receiving uplink data sent by the BP/UL CL is (IP address1, TEID1).

S502: An AF 2 determines that data in a data flow of the first application that the terminal is accessing needs to be processed by a first application server in a local area network and the first application server initiates a new data flow based on processed data.

S503: The AF 2 sends LAN traffic steering information and an address Addrl of the terminal to a PCF.

The LAN traffic steering information may carry a part or all of the information shown in Table 1, to indicate that the data in the data flow of the first application needs to be processed by the first application server in the local area network and the first application server initiates the new data flow based on the processed data.

Specifically, the LAN traffic steering information may be carried in a policy authorization create request message that is sent by the AF 2 to the PCF.

In an implementation, the policy authorization create request message may be directly sent by the AF 2 to the PCF, or sent by the AF 2 to a NEF and then forwarded by the NEF to the PCF.

Correspondingly, the PCF receives the LAN traffic steering information, and sends an acknowledgment message (also referred to as an answer message or a response message) to the AF.

S504: The PCF performs PCC rule authorization based on the LAN traffic steering information, and formulates a PCC rule.

When the LAN traffic steering information includes a spatial validity condition and/or a temporal validity condition, PCC authorization is performed only when these conditions are met.

For example, the PCF may include the LAN traffic steering information in the PCC rule, and the LAN traffic steering information carried in the PCC rule includes a local termination indication and/or a part or all of the information shown in Table 2.

S505: The PCF sends the PCC rule to an SMF.

Correspondingly, the SMF receives the PCC rule, and sends an acknowledgment message to the PCF after the PCC rule is installed.

S506: The SMF selects a first user plane network element based on the LAN traffic steering information in the PCC rule.

For a manner of selecting the first user plane network element, refer to the descriptions of selecting the first user plane network element in this application. Details are not described herein again.

It should be understood that the SMF may further determine, based on "information used to identify data" or "direction information" in the LAN traffic steering information, that a data flow transmitted through the first session includes an uplink data flow, to formulate a steering rule for uplink data of the first application.

S507: If a BP is inserted between the RAN and the second user plane network element, the SMF may further allocate a second IPv6 address prefix to the terminal, and send a routing rule to the terminal, to indicate the terminal to access the first application by using the second IPv6 address prefix. If a UL CL is inserted between the RAN and the second user plane network element, this step does not need to be performed.

S508: The SMF sends an N4 session modification request to the BP/UL CL, where the N4 session modification request carries a third policy rule.

The third policy rule is used to indicate the BP/UL CL to send first data to the first user plane network element. The first data is uplink data of the first application. For the BP, the third policy rule may be used to indicate the BP to identify data of the first application whose source address is an address corresponding to the second IPv6 address prefix as the first data, and the third policy rule may be used to indicate the BP to send the first data to an endpoint (IP address2, TEID2) of the first user plane network element. For the UL CL, the third policy rule may be used to indicate the UL CL to identify a data packet corresponding to an application identifier in the "information used to identify data" as the first data, and the third policy rule may be used to indicate the BP to send the first data to the endpoint (IP address2, TEID2) of the first user plane network element.

Correspondingly, after receiving the policy rule from the SMF, the BP/UL CL may send an acknowledgment message to the SMF.

S509: The SMF sends an N4 session establishment request to the first user plane network element, where the N4 session establishment request carries a first policy rule.

Specifically, the first policy rule may carry a PDR#3 and a FAR#3.

Correspondingly, after receiving the first policy rule, the first user plane network element may send an acknowledgment message to the SMF.

After the foregoing steps, the terminal may initiate interaction with the first application server by using the IPv6 address constructed by the second IPv6 prefix or the IPv4 address, a data packet of the first application is sent by the BP/UL CL to the first user plane network element, and the first user plane network element matches related data according to the PDR#3 and performs the FAR#3. According to the FAR#3, the first user plane network element performs a traffic steering policy corresponding to a traffic steering policy identifier, and steers a data flow to the first application server. After receiving the first data forwarded by the first user plane network element, the first application server may process the data packet and then initiate interaction with the second application server. The first application server initiates a new data flow (namely, second data) by using an address of the first application server.

S510: An AF 1 sends an authorization request of the PCC rule to the PCF. The authorization request carries the address of the first application server, the address of the terminal (the address corresponding to the second IPv6 prefix of the terminal or the IPv4 address of the terminal), service request information, and the like. The service request information may include information such as 5-tuple information exchanged between the terminal and the first application server, QoS request information, and an AF application identifier.

Correspondingly, after receiving the authorization request, the PCF sends an acknowledgment message to the AF 1.

S511: The PCF compares the address of the terminal carried in the authorization request with an address of the terminal of the first session, determines that the authorization request is associated with the first session, and determines the PCC rule and association information of the first session.

The association information of the first session may include a correspondence among the address of the terminal, the address of the first application server, and an identifier of the first application. The PCC rule may be determined by the PCF based on the service request information carried in the authorization request.

In an implementation, when determining that the address of the terminal sent by the AF 1 is consistent with the address, of the terminal, managed by the first session, the PCF may determine that the authorization request is associated with the first session.

S512: The PCF sends the PCC rule to the SMF.

Correspondingly, the SMF receives the PCC rule, and sends an acknowledgment message to the PCF after the PCC rule is installed.

S513: The SMF sends an N4 session modification request to the first user plane network element, where the N4 session modification request carries a second policy rule.

The second policy rule may include a PDR#4 and a FAR#4.

Correspondingly, after receiving the second policy rule, the first user plane network element may send an acknowledgment message to the SMF.

S514: The SMF sends an N4 session modification request to the BP/UL CL, where the N4 session modification request carries a fourth policy rule.

The fourth policy rule may be used to indicate the BP/UL CL to send data from the first user plane network element to the receiving endpoint (IP address1, TEID1) of the second user plane network element. In other words, the BP/UL CL sends a data packet from the first user plane network element through the tunnel established between the BP/UL CL and the second user plane network element in S501.

Correspondingly, after receiving the fourth policy rule, the BP/UL CL may send an acknowledgment message to the SMF.

S515: The SMF sends a policy rule to the first user plane network element, where the policy rule is used to perform policy and charging control on service data of a local application service and a central application service. The policy rule is formulated according to the PCC rule delivered in S510.

Correspondingly, the first user plane network element sends an acknowledgment message to the SMF.

In the foregoing embodiment, the terminal initiates interaction with the first application server by using the IPv6 address constructed by the second IPv6 prefix or the IPv4 address, the data packet is sent by the BP/UL CL to the first user plane network element, and the first user plane network element matches the related data according to the PDR#3 in the first policy rule and performs the FAR#3 in the first policy rule. According to the FAR#3, the first user plane network element performs the traffic steering policy corresponding to the traffic steering policy identifier, and steers the first data to the first application server. Then, the AF 1 corresponding to the first application server provides the address of the first application server and the address of the terminal for the PCF. The PCF sends the association information of the first session to the SMF based on the address of the first application server and the address of the terminal, where the association information of the first session may include the correspondence among the address of the terminal, the address of the first application server, and the identifier of the first application. The SMF may further send the second policy rule to the first user plane network element, to indicate the first user plane network element to send, to a data receiving endpoint (address3 and TEID3) of the BP/UL CL, the data packet (whose source address is the IP addr2) sent by the first application server. The SMF further sends the third policy rule to the BP/UL CL, to indicate the BP/UL CL to send the received data packet to the receiving endpoint (address1 and TEID1) of the second user plane network element, and then the receiving endpoint forwards the received data packet to the second application server. According to the foregoing procedure, the first user plane network element may associate the data packet sent by the first application server with the first session of the terminal, so that the data can be forwarded to the second application server.

In addition, for downlink data, a similar implementation may be used. Specifically, the first data initiated by the second application server is sent to the BP/UL CL, and the BP/UL CL may identify, based on a destination identifier of the first data and an application identifier, the data as data sent to the first application of the terminal, and send a data packet of the first data to the first user plane network element. The first user plane network element matches the first data according to the PDR#3, and performs the FAR#3. According to the FAR#3, the first user plane network element performs the traffic steering policy corresponding to the traffic steering policy identifier, and steers the first data to the first application server. Then, the AF 1 corresponding to the first application server provides the address of the first application server and the address of the terminal for the PCF. The PCF sends the association information of the first session to the SMF based on the address of the first application server and the address of the terminal, where the association information of the first session may include the correspondence among the address of the terminal, the address of the first application server, and the identifier of the first application. The SMF may further send the second policy rule to the first user plane network element, to indicate the first user plane network element to send, to a data receiving endpoint (address3 and TEID3) of the BP/UL CL, the data packet (whose source address is the IP addr2) sent by the first application server. The SMF further sends the third policy rule to the BP/UL CL, to indicate the BP/UL CL to send the received data packet to the data receiving endpoint of the RAN accessed by the terminal. Further, the BP/UL CL sends the data to the receiving endpoint of the RAN. Subsequently, the RAN may send the data to the terminal. According to the foregoing procedure, the first user plane network element may associate the data packet sent by the local application server with the first session of the terminal, so that the data can be forwarded to the terminal.

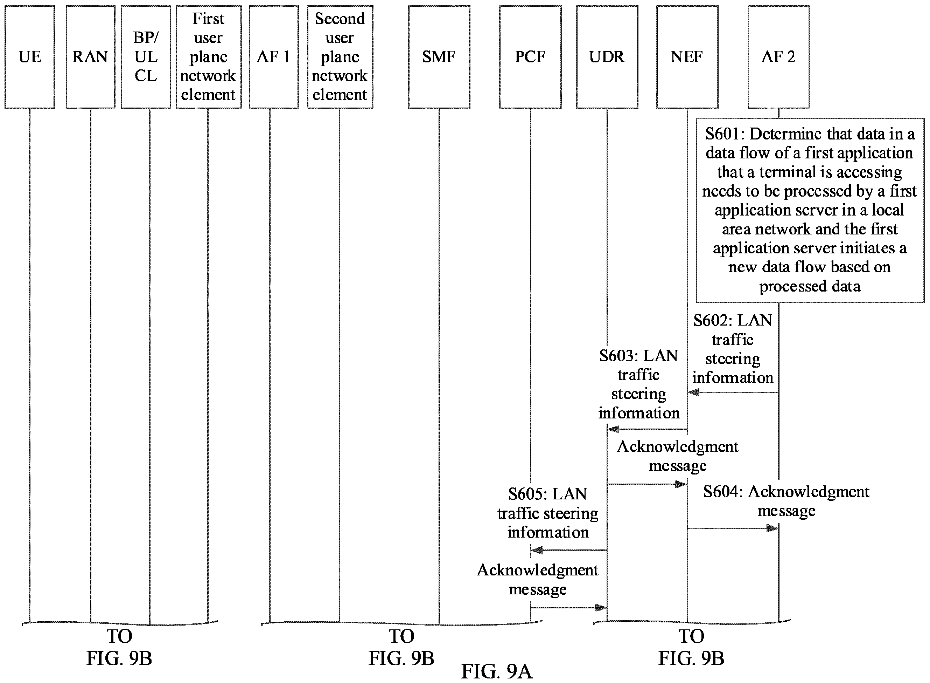

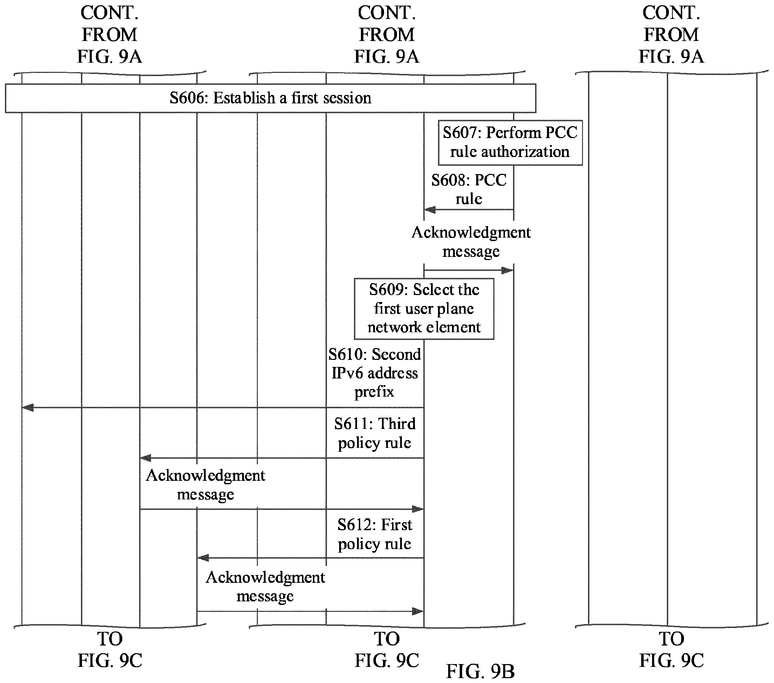

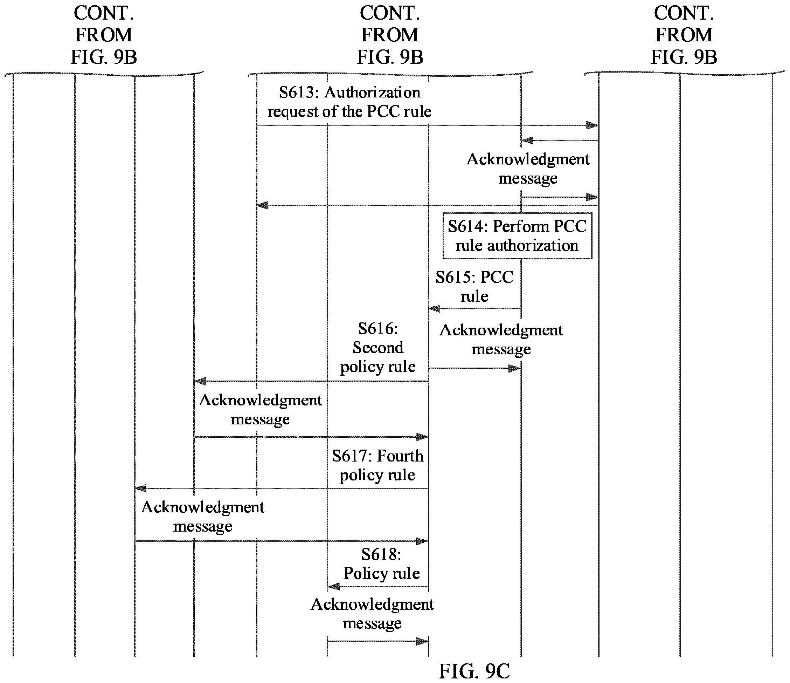

If a network has identified, before a first session is established, that data of a first application needs to be processed by a local application server (or in other words, the first session is not limited to an established session, and it may be understood that this application may be performed for any session of the first application of a terminal), a communication method provided in an embodiment of this application may include the following steps shown in FIG. 9A, FIG. 9B, and FIG. 9C.

S601: An AF determines that data in a data flow of the first application that the terminal is accessing needs to be processed by a first application server in a local area network and the first application server initiates a new data flow based on processed data.

For example, the first application server is deployed in a LAN of MEC.

S602: The AF sends LAN traffic steering information to a NEF.

The LAN traffic steering information carries an external group identifier of the terminal. The NEF may map the external group identifier to an internal group identifier, and include the internal group identifier in the LAN traffic steering information sent to a PCF. In addition, the LAN traffic steering information may further carry a part or all of the information shown in Table 1, to indicate that the data in the data flow of the first application needs to be processed by the first application server in the local area network and the first application server initiates the new data flow based on the processed data.

Specifically, the LAN traffic steering information may be carried in a traffic influence create request message that is sent by the AF to the NEF.

S603: The NEF sends the LAN traffic steering information to a UDR, to store the LAN traffic steering information into the UDR.

Specifically, the LAN traffic steering information may be carried in a data management create request message that is sent by the NEF to the UDR.

Correspondingly, after storing the LAN traffic steering information, the UDR sends an acknowledgment message to the NEF.

S604: The NEF sends an acknowledgment message to the AF.

S605: The UDR sends the LAN traffic steering information to the PCF that has subscribed to a change notification of the LAN traffic steering information.

The PCF may subscribe to the change notification of the LAN traffic steering information from the UDR, to learn that the LAN traffic steering information stored by the UDR changes.

Specifically, the LAN traffic steering information may be carried in a data management notification request message that is sent by the UDR to the PCF.

Correspondingly, after receiving and storing the LAN traffic steering information, the PCF sends an acknowledgment message to the UDR.

S606: Establish the first session.

A process of establishing the first session may be initiated by the UE. The process of establishing the first session may relate to the following operation: The network selects a second user plane network element as a PSA. An IP address allocated by the network to the terminal is denoted as an Addrl (which may be a first IPv6 prefix or an IPv4 address). The terminal accesses, through the first session, a second application server of a central DN corresponding to the first application. The network inserts a BP/UL CL between a RAN accessed by the terminal and the second user plane network element. The network separately establishes a tunnel between the terminal and the RAN, a tunnel between the RAN and the BP/UL CL, and a tunnel between the BU/UL CL and the second user plane network element. A receiving endpoint, of the second user plane network element, for receiving uplink data sent by the BP/UL CL is (IP address1, TEID1).

In addition, during establishment of the first session, an SMF may establish session management policy association with the PCF, and the PCF obtains an internal group identifier of a group to which the terminal belongs. The PCF may further interact with the UDR to obtain subscription information of the terminal.

S607: The PCF performs PCC rule authorization based on the LAN traffic steering information, and formulates a PCC rule.

For example, after identifying that the LAN traffic steering information is applicable to the terminal corresponding to the first session, the PCF may perform PCC rule authorization.

Specifically, if the PCF obtains the internal group identifier of the terminal, after determining that the internal group identifier of the terminal is included in the internal group identifier carried in the LAN traffic steering information, the PCF may determine that the LAN traffic steering information is applicable to the terminal corresponding to the first session. Alternatively, if the LAN traffic steering information is applicable to all terminals, the PCF may determine that the LAN traffic steering information is applicable to the terminal corresponding to the first session.

In addition, when the LAN traffic steering information includes a spatial validity condition and/or a temporal validity condition, PCC authorization is performed only when these conditions are met.

For example, the PCF may include the LAN traffic steering information in the PCC rule, and the LAN traffic steering information carried in the PCC rule includes a local termination indication and/or a part or all of the information shown in Table 2.

S608: The PCF sends the PCC rule to the SMF.

Correspondingly, the SMF receives the PCC rule, and sends an acknowledgment message to the PCF after the PCC rule is installed.

S609: The SMF selects a first user plane network element based on the LAN traffic steering information in the PCC rule.

For a manner of selecting the first user plane network element, refer to the descriptions of selecting the first user plane network element in this application. Details are not described herein again.

It should be understood that the SMF may further determine, based on "information used to identify data" or "direction information" in the LAN traffic steering information, that a data flow transmitted through the first session includes an uplink data flow, to formulate a steering rule for uplink data of the first application.

S610: If a BP is inserted between the RAN and the second user plane network element, the SMF may further allocate a second IPv6 address prefix to the terminal, and send a routing rule to the terminal, to indicate the terminal to access the first application by using the second IPv6 address prefix. If a UL CL is inserted between the RAN and the second user plane network element, this step does not need to be performed.

S611: The SMF sends an N4 session modification request to the BP/UL CL, where the N4 session modification request carries a third policy rule.

The third policy rule is used to indicate the BP/UL CL to send first data to the first user plane network element. The first data is uplink data of the first application. For the BP, the third policy rule may be used to indicate the BP to identify data of the first application whose source address is an address corresponding to the second IPv6 address prefix as the first data, and the third policy rule may be used to indicate the BP to send the first data to an endpoint (IP address2, TEID2) of the first user plane network element. For the UL CL, the third policy rule may be used to indicate the UL CL to identify a data packet corresponding to an application identifier in the "information used to identify data" as the first data, and the third policy rule may be used to indicate the BP to send the first data to the endpoint (IP address2, TEID2) of the first user plane network element.

Correspondingly, after receiving the policy rule from the SMF, the BP/UL CL may send an acknowledgment message to the SMF.

S612: The SMF sends an N4 session establishment request to the first user plane network element, where the N4 session establishment request carries a first policy rule.

Specifically, the first policy rule may carry a PDR#3 and a FAR#3.

Correspondingly, after receiving the first policy rule, the first user plane network element may send an acknowledgment message to the SMF.

After the foregoing steps, the terminal may initiate interaction with the first application server by using the IPv6 address constructed by the second IPv6 prefix or the IPv4 address, a data packet of the first application is sent by the BP/UL CL to the first user plane network element, and the first user plane network element matches related data according to the PDR#3 and performs the FAR#3. According to the FAR#3, the first user plane network element performs a traffic steering policy corresponding to a traffic steering policy identifier, and steers a data flow to the first application server. After receiving the first data forwarded by the first user plane network element, the first application server may process the data packet and then initiate interaction with the second application server. The first application server initiates a new data flow (namely, second data) by using an address of the first application server.

S613: An AF 1 sends an authorization request of the PCC rule to the PCF.

The authorization request carries the address of the first application server, the address of the terminal (the address corresponding to the second IPv6 prefix of the terminal or the IPv4 address of the terminal), service request information, and the like. The service request information may include information such as 5-tuple information exchanged between the terminal and the first application server, QoS request information, and an AF application identifier.

Correspondingly, after receiving the authorization request, the PCF sends an acknowledgment message to the AF 1.

S614: The PCF compares the address of the terminal carried in the authorization request with an address of the terminal of the first session, determines that the authorization request is associated with the first session, and determines the PCC rule and association information of the first session.

The association information of the first session may include a correspondence among the address of the terminal, the address of the first application server, and an identifier of the first application. The PCC rule may be determined by the PCF based on the service request information carried in the authorization request.

In an implementation, when determining that the address of the terminal sent by the AF 1 is consistent with the address, of the terminal, managed by the first session, the PCF may determine that the authorization request is associated with the first session.

S615: The PCF sends the PCC rule to the SMF.

Correspondingly, the SMF receives the PCC rule, and sends an acknowledgment message to the PCF after the PCC rule is installed.

S616: The SMF sends an N4 session modification request to the first user plane network element, where the N4 session modification request carries a second policy rule.

The second policy rule may include a PDR#4 and a FAR#4.

Correspondingly, after receiving the second policy rule, the first user plane network element may send an acknowledgment message to the SMF.

S617: The SMF sends an N4 session modification request to the BP/UL CL, where the N4 session modification request carries a fourth policy rule.

The fourth policy rule may be used to indicate the BP/UL CL to send data from the first user plane network element to the receiving endpoint (IP address1, TEID1) of the second user plane network element. In other words, the BP/UL CL sends a data packet from the first user plane network element through the tunnel established between the BP/UL CL and the second user plane network element in S501.

Correspondingly, after receiving the fourth policy rule, the BP/UL CL may send an acknowledgment message to the SMF.

S618: The SMF sends a policy rule to the first user plane network element, where the policy rule is used to perform policy and charging control on service data of a local application service and a central application service. The policy rule is formulated according to the PCC rule delivered in S510.

Correspondingly, the first user plane network element sends an acknowledgment message to the SMF.

According to the foregoing procedure, the first user plane network element may associate the data packet sent by the local application server with the first session of the terminal, so that the processed data can be forwarded to the second application server. Similarly, a downlink data transmission procedure may be implemented in a similar manner with reference to the foregoing procedure. Details are not described herein for brevity.

In the foregoing embodiments provided in this application, the methods, namely, the method procedures, provided in embodiments of this application are described from a perspective of functions implemented by the session management network element, the first user plane network element, the first application server, the policy control network element, and the like. To implement functions in the foregoing methods provided in embodiments of this application, the network device, the first communication apparatus, the second communication apparatus, and the third communication apparatus each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

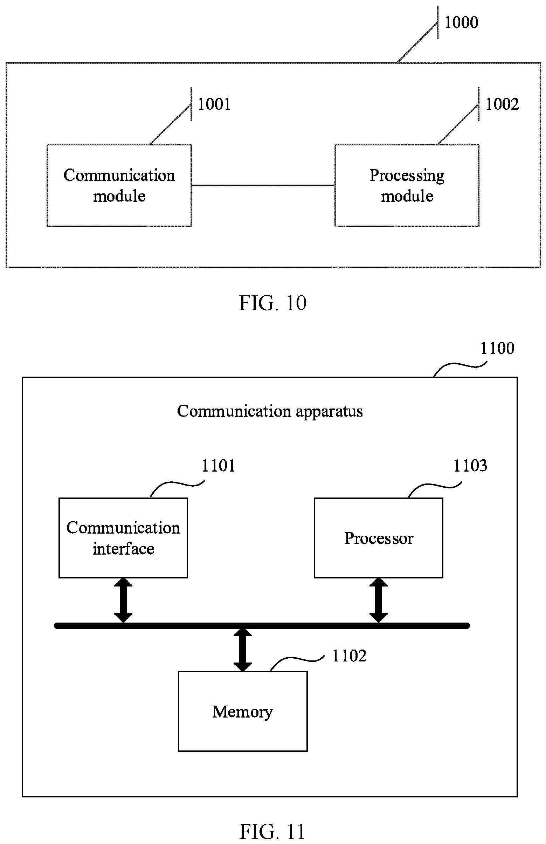

As shown in FIG. 10, a communication apparatus provided in an embodiment of this application may include a communication module 1001 and a processing module 1002. The communication module 1001 and the processing module 1002 are coupled to each other. The communication apparatus 1000 may be configured to perform the steps performed by the session management network element shown in FIG. 4, FIG. 5A and FIG. 5B, FIG. 6A and FIG. 6B, FIG. 7, FIG. 8A, FIG. 8B, and FIG. 8C, and FIG. 9A, FIG. 9B, and FIG. 9C. The communication module 1001 may be configured to support the communication apparatus 1000 in communication. The communication module 1001 may also be referred to as a communication unit, a communication interface, a transceiver module, or a transceiver unit. The communication module 1001 may have a wireless communication function, for example, can communicate with another communication apparatus in a wireless communication manner. The processing module 1002 may also be referred to as a processing unit, and may be configured to support the communication apparatus 1000 in performing a processing action of the session management network element in the foregoing method embodiments, including but not limited to: generating information and a message that are sent by the communication module 1001, and/or demodulating and decoding a signal received by the communication module 1001.

Specifically, when the steps performed by the session management network element in FIG. 4, FIG. 5A and FIG. 5B, and FIG. 6A and FIG. 6B in the foregoing method embodiments are performed, the processing module 1002 may be configured to determine a first policy rule and a second policy rule shown in the first aspect. The communication module 1001 may be configured to send the first policy rule and the second policy rule to a first user plane network element.

In a possible example, the communication module 1001 may be further configured to receive third indication information from a policy control network element, where the third indication information is used to indicate a first application server to terminate a data flow of a first application. The processing module 1002 may be further configured to include first indication information in the first policy rule based on the third indication information.

In another possible example, the communication module 1001 may be further configured to receive fourth indication information from a policy control network element, where the fourth indication information is used to indicate a first application server to terminate a data flow of a first application. The processing module 1002 may be further configured to include identification information of a first session in the first policy rule based on the fourth indication information.

When the steps performed by the session management network element in FIG. 7, FIG. 8A, FIG. 8B, and FIG. 8C, and FIG. 9A, FIG. 9B, and FIG. 9C in the foregoing method embodiments are performed, the communication module 1001 may receive an address of a first application server from a policy control network element. The processing module 1002 may be configured to determine a first policy rule and a second policy rule. The communication module 1001 may be further configured to send the first policy rule and the second policy rule to a first user plane network element.

In addition, in another possible implementation, if the session management network element is implemented by using a hardware component, a structure of the session management network element may alternatively be that shown in FIG. 11. For ease of understanding, FIG. 11 shows only a structure necessary for performing the methods shown in this application, and no limitation is imposed on that a communication apparatus may have more components in this application. The communication apparatus 1100 may include a communication interface 1101, a memory 1102, and a processor 1103. The communication interface 1101 may be used by the communication apparatus to perform communication, for example, to send or receive a signal. The memory 1102 is coupled to the processor 1103, and is configured to store a program and data that are necessary for implementing functions of the communication apparatus 1100. The processor 1103 is configured to support the communication apparatus 1100 in performing a processing function performed by the session management network element in the foregoing methods, for example, determining to generate information and a message that are sent by the communication interface 1101, and/or demodulating and decoding a signal received by the communication interface 1101. The memory 1102 and the processor 1103 may be integrated or may be independent of each other.

For example, the communication interface 1101 may be a wireless communication interface (also referred to as a wireless transceiver), and may be configured to support the communication apparatus 1100 in receiving and sending signaling and/or data through a wireless air interface. In addition, the communication interface may alternatively be a communication port, for example, a communication port (also referred to as an interface) used for communication between network elements. The communication interface 1101 may also be referred to as a transceiver unit or a communication unit. The processor 1103 may be implemented by using a processing chip or a processing circuit.

When the communication methods shown in this application are performed, the communication interface 1101 may be configured to perform the steps performed by the communication module 1001, and the processor 1103 may invoke a program in the memory 1102 to perform the steps performed by the processing module 1002.

Specifically, when the steps performed by the session management network element in FIG. 4, FIG. 5A and FIG. 5B, and FIG. 6A and FIG. 6B in the foregoing method embodiments are performed, the processor 1103 may be configured to determine a first policy rule and a second policy rule shown in the first aspect. The communication interface 1101 may be configured to send the first policy rule and the second policy rule to a first user plane network element.

In a possible example, the communication interface 1101 may be further configured to receive third indication information from a policy control network element, where the third indication information is used to indicate a first application server to terminate a data flow of a first application. The processor 1103 may be further configured to include first indication information in the first policy rule based on the third indication information.

In another possible example, the communication interface 1101 may be further configured to receive fourth indication information from a policy control network element, where the fourth indication information is used to indicate a first application server to terminate a data flow of a first application. The processor 1103 may be further configured to include identification information of a first session in the first policy rule based on the fourth indication information.

When the steps performed by the session management network element in FIG. 7, FIG. 8A, FIG. 8B, and FIG. 8C, and FIG. 9A, FIG. 9B, and FIG. 9C in the foregoing method embodiments are performed, the communication interface 1101 may receive an address of a first application server from a policy control network element. The processor 1103 may be configured to determine a first policy rule and a second policy rule. The communication interface 1101 may be further configured to send the first policy rule and the second policy rule to a first user plane network element.

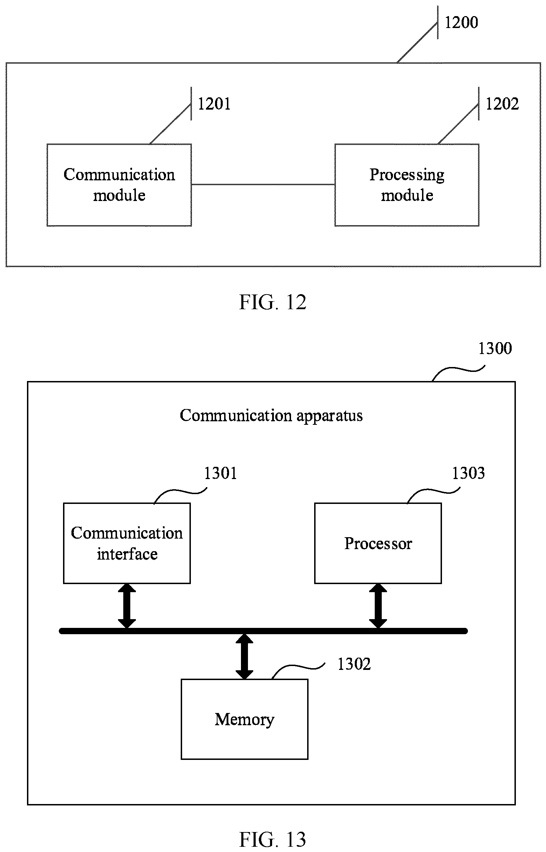

As shown in FIG. 12, a communication apparatus provided in an embodiment of this application may include a communication module 1201 and a processing module 1202. The communication module 1201 and the processing module 1202 are coupled to each other. The communication apparatus 1200 may be configured to perform the steps performed by the first user plane network element shown in FIG. 4, FIG. 5A and FIG. 5B, FIG. 6A and FIG. 6B, FIG. 7, FIG. 8A, FIG. 8B, and FIG. 8C, and FIG. 9A, FIG. 9B, and FIG. 9C. The communication module 1201 may be configured to support the communication apparatus 1200 in communication. The communication module 1201 may also be referred to as a communication unit, a communication interface, a transceiver module, or a transceiver unit. The communication module 1201 may have a wireless communication function, for example, can communicate with another communication apparatus in a wireless communication manner. The processing module 1202 may also be referred to as a processing unit, and may be configured to support the communication apparatus 1200 in performing a processing action of the first user plane network element in the foregoing method embodiments, including but not limited to: generating information and a message that are sent by the communication module 1201, and/or demodulating and decoding a signal received by the communication module 1201.

Specifically, when the steps performed by the first user plane network element in FIG. 4, FIG. 5A and FIG. 5B, FIG. 6A and FIG. 6B, FIG. 7, FIG. 8A, FIG. 8B, and FIG. 8C, and FIG. 9A, FIG. 9B, and FIG. 9C in the foregoing method embodiments are performed, the processing module 1202 may be configured to receive a first policy rule and a second policy rule from a session management network element.

In addition, in another possible implementation, if the first user plane network element is implemented by using a hardware component, a structure of the first user plane network element may alternatively be that shown in FIG. 13. For ease of understanding, FIG. 13 shows only a structure necessary for performing the methods shown in this application, and no limitation is imposed on that a communication apparatus may have more components in this application. The communication apparatus 1300 may include a communication interface 1301, a memory 1302, and a processor 1303. The communication interface 1301 may be used by the communication apparatus to perform communication, for example, to send or receive a signal. The memory 1302 is coupled to the processor 1303, and is configured to store a program and data that are necessary for implementing functions of the communication apparatus 1300. The processor 1303 is configured to support the communication apparatus 1300 in performing a processing function performed by the first user plane network element in the foregoing methods, for example, determining to generate information and a message that are sent by the communication interface 1301, and/or demodulating and decoding a signal received by the communication interface 1301. The memory 1302 and the processor 1303 may be integrated or may be independent of each other.

For example, the communication interface 1301 may be a wireless communication interface (also referred to as a wireless transceiver), and may be configured to support the communication apparatus 1300 in receiving and sending signaling and/or data through a wireless air interface. In addition, the communication interface may alternatively be a communication port, for example, a communication port (also referred to as an interface) used for communication between network elements. The communication interface 1301 may also be referred to as a transceiver unit or a communication unit. The processor 1303 may be implemented by using a processing chip or a processing circuit.

Specifically, when the steps performed by the first user plane network element in FIG. 4, FIG. 5A and FIG. 5B, FIG. 6A and FIG. 6B, FIG. 7, FIG. 8A, FIG. 8B, and FIG. 8C, and FIG. 9A, FIG. 9B, and FIG. 9C in the foregoing method embodiments are performed, the communication interface 1301 may be configured to receive a first policy rule and a second policy rule from a session management network element.

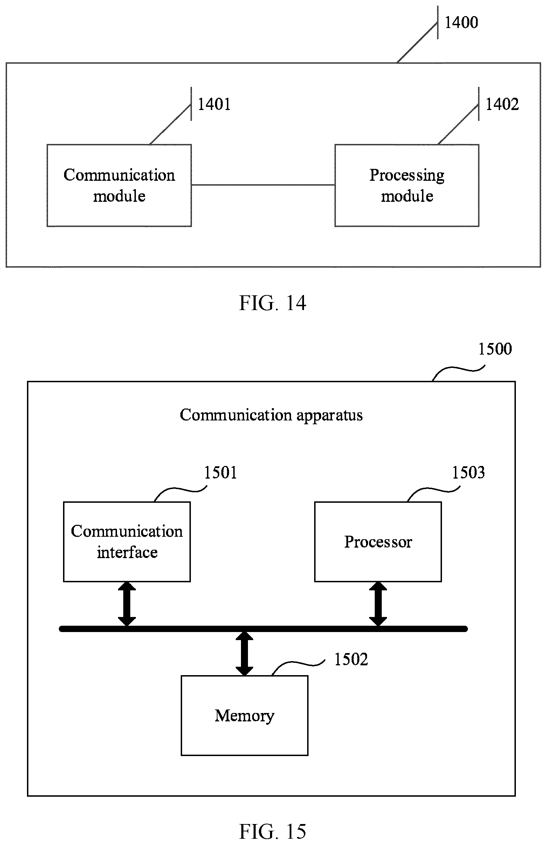

As shown in FIG. 14, a communication apparatus provided in an embodiment of this application may include a communication module 1401 and a processing module 1402. The communication module 1401 and the processing module 1402 are coupled to each other. The communication apparatus 1400 may be configured to perform the steps performed by the first application server shown in FIG. 4, FIG. 5A and FIG. 5B, and FIG. 6A and FIG. 6B. The communication module 1401 may be configured to support the communication apparatus 1400 in communication. The communication module 1401 may also be referred to as a communication unit, a communication interface, a transceiver module, or a transceiver unit. The communication module 1401 may have a wireless communication function, for example, can communicate with another communication apparatus in a wireless communication manner. The processing module 1402 may also be referred to as a processing unit, and may be configured to support the communication apparatus 1400 in performing a processing action of the first application server in the foregoing method embodiments, including but not limited to: generating information and a message that are sent by the communication module 1401, and/or demodulating and decoding a signal received by the communication module 1401.

Specifically, when the steps performed by the first application server in FIG. 4, FIG. 5A and FIG. 5B, and FIG. 6A and FIG. 6B in the foregoing method embodiments are performed, the communication module 1401 may be configured to receive first data of a first application from a first user plane network element, where the first data includes second indication information or identification information of a first session. The processing module 1402 may include the identification information of the first session in second data based on the second indication information or the identification information of the first session. The communication module 1401 may further send the second data to the first user plane network element.

In addition, in another possible implementation, if the first application server is implemented by using a hardware component, a structure of the first application server may alternatively be that shown in FIG. 15. For ease of understanding, FIG. 15 shows only a structure necessary for performing the methods shown in this application, and no limitation is imposed on that a communication apparatus may have more components in this application. The communication apparatus 1500 may include a communication interface 1501, a memory 1502, and a processor 1503. The communication interface 1501 may be used by the communication apparatus to perform communication, for example, to send or receive a signal. The memory 1502 is coupled to the processor 1503, and is configured to store a program and data that are necessary for implementing functions of the communication apparatus 1500. The processor 1503 is configured to support the communication apparatus 1500 in performing a processing function performed by the first application server in the foregoing methods, for example, determining to generate information and a message that are sent by the communication interface 1501, and/or demodulating and decoding a signal received by the communication interface 1501. The memory 1502 and the processor 1503 may be integrated or may be independent of each other.

For example, the communication interface 1501 may be a wireless communication interface (also referred to as a wireless transceiver), and may be configured to support the communication apparatus 1500 in receiving and sending signaling and/or data through a wireless air interface. In addition, the communication interface may alternatively be a communication port, for example, a communication port (also referred to as an interface) used for communication between network elements. The communication interface 1501 may also be referred to as a transceiver unit or a communication unit. The processor 1503 may be implemented by using a processing chip or a processing circuit.

Specifically, when the steps performed by the first application server in FIG. 4, FIG. 5A and FIG. 5B, and FIG. 6A and FIG. 6B in the foregoing method embodiments are performed, the communication interface 1501 may be configured to receive first data of a first application from a first user plane network element, where the first data includes second indication information or identification information of a first session. The processor 1503 may include the identification information of the first session in second data based on the second indication information or the identification information of the first session. The communication interface 1501 may further send the second data to the first user plane network element.

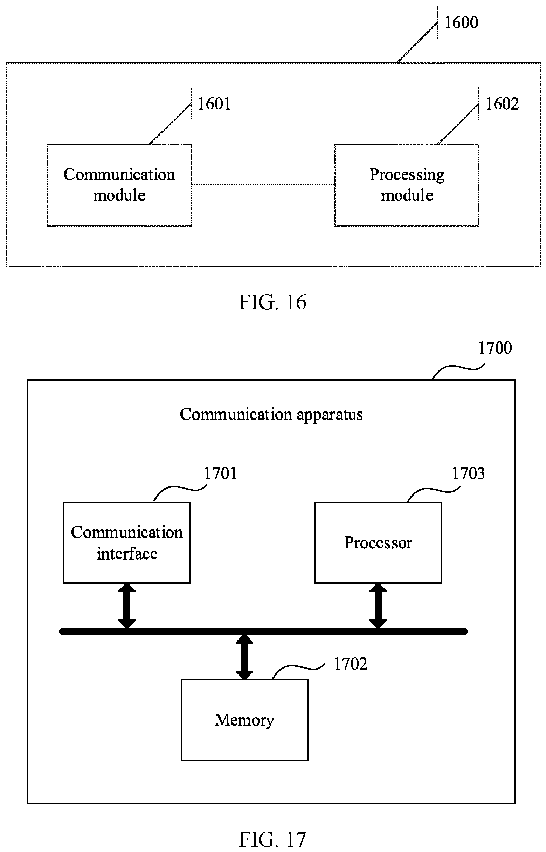

As shown in FIG. 16, a communication apparatus provided in an embodiment of this application may include a communication module 1601 and a processing module 1602. The communication module 1601 and the processing module 1602 are coupled to each other. The communication apparatus 1600 may be configured to perform the steps performed by the policy control network element shown in FIG. 7, FIG. 8A, FIG. 8B, and FIG. 8C, and FIG. 9A, FIG. 9B, and FIG. 9C. The communication module 1601 may be configured to support the communication apparatus 1600 in communication. The communication module 1601 may also be referred to as a communication unit, a communication interface, a transceiver module, or a transceiver unit. The communication module 1601 may have a wireless communication function, for example, can communicate with another communication apparatus in a wireless communication manner. The processing module 1602 may also be referred to as a processing unit, and may be configured to support the communication apparatus 1600 in performing a processing action of the policy control network element in the foregoing method embodiments, including but not limited to: generating information and a message that are sent by the communication module 1601, and/or demodulating and decoding a signal received by the communication module 1601.

Specifically, when the steps performed by the policy control network element in FIG. 7, FIG. 8A, FIG. 8B, and FIG. 8C, and FIG. 9A, FIG. 9B, and FIG. 9C in the foregoing method embodiments are performed, the communication module 1601 may be configured to receive a request message from a first application function network element, where the request message includes an address of a terminal and an address of a first application server, the first application server corresponds to a first application, and the first server corresponds to the first application function network element. The processing module 1602 may determine, based on the address of the terminal, that the request message is associated with a first session, where the first session is used to transmit data of the first application between the terminal and a second application server, and the second application server corresponds to the first application. The communication module 1601 may be further configured to send the address of the first application server to a session management network element.

In addition, in another possible implementation, if the policy control network element is implemented by using a hardware component, a structure of the policy control network element may alternatively be that shown in FIG. 17. For ease of understanding, FIG. 17 shows only a structure necessary for performing the methods shown in this application, and no limitation is imposed on that a communication apparatus may have more components in this application. The communication apparatus 1700 may include a communication interface 1701, a memory 1702, and a processor 1703. The communication interface 1701 may be used by the communication apparatus to perform communication, for example, to send or receive a signal. The memory 1702 is coupled to the processor 1703, and is configured to store a program and data that are necessary for implementing functions of the communication apparatus 1700. The processor 1703 is configured to support the communication apparatus 1700 in performing a processing function performed by the policy control network element in the foregoing methods, for example, determining to generate information and a message that are sent by the communication interface 1701, and/or demodulating and decoding a signal received by the communication interface 1701. The memory 1702 and the processor 1703 may be integrated or may be independent of each other.

For example, the communication interface 1701 may be a wireless communication interface (also referred to as a wireless transceiver), and may be configured to support the communication apparatus 1700 in receiving and sending signaling and/or data through a wireless air interface. In addition, the communication interface may alternatively be a communication port, for example, a communication port (also referred to as an interface) used for communication between network elements. The communication interface 1701 may also be referred to as a transceiver unit or a communication unit. The processor 1703 may be implemented by using a processing chip or a processing circuit.

Specifically, when the steps performed by the policy control network element in FIG. 7, FIG. 8A, FIG. 8B, and FIG. 8C, and FIG. 9A, FIG. 9B, and FIG. 9C in the foregoing method embodiments are performed, the communication interface 1701 may be configured to receive a request message from a first application function network element, where the request message includes an address of a terminal and an address of a first application server, the first application server corresponds to a first application, and the first server corresponds to the first application function network element. The processor 1703 may determine, based on the address of the terminal, that the request message is associated with a first session, where the first session is used to transmit data of the first application between the terminal and a second application server, and the second application server corresponds to the first application. The communication interface 1701 may be further configured to send the address of the first application server to a session management network element.

Based on a same concept as the foregoing method embodiments, an embodiment of this application further provides a computer-readable storage medium. The computer-readable storage medium stores a computer program (also referred to as instructions). When the program is executed by a processor, the computer is enabled to perform operations performed by the session management network element, the first user plane network element, the first application server, and/or the policy control network element in any one of the foregoing method embodiments or the possible implementations of the method embodiments.

Based on a same concept as the foregoing method embodiments, this application further provides a computer program product. When the computer program product is invoked and executed by a computer, the computer is enabled to implement operations performed by the session management network element, the first user plane network element, the first application server, and/or the policy control network element in any one of the foregoing method embodiments or the possible implementations of the method embodiments.

Based on a same concept as the foregoing method embodiments, this application further provides a chip or a chip system. The chip is coupled to a transceiver, configured to implement operations performed by the session management network element, the first user plane network element, the first application server, and/or the policy control network element in any one of the foregoing method embodiments or possible implementations of the method embodiments. The chip system may include the chip and components such as a memory and a communication interface.

Based on a same concept as the foregoing method embodiments, this application further provides a communication system. The communication system may be configured to implement operations performed by the session management network element, the first user plane network element, the first application server, and/or the policy control network element in any one of the foregoing method embodiments or possible implementations of the method embodiments. For example, the communication system has a structure shown in any one of FIG. 1 to FIG. 3.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Certainly, a person skilled in the art can make various modifications and variations to this application without departing from the protection scope of this application. In this way, this application is intended to cover these modifications and variations of this application provided that they fall within the scope of the claims of this application and equivalent technologies thereof.

## Claims

1. A communication method, comprising:
determining, by a session management network element, a first policy rule and a second policy rule, wherein the first policy rule is used to indicate a first user plane network element to steer first data of a first application to a first application server, the second policy rule is used by the first user plane network element to determine to send second data of the first application to a network element associated with a first session, the first session is used to transmit data of the first application between a terminal and a second application server, the second data comes from the first application server, the second data comprises an address of the first application server, and the second data comprises identification information of the first session; and
sending, by the session management network element, the first policy rule and the second policy rule to the first user plane network element, wherein
the first policy rule comprises first indication information;
the first indication information is used by the first user plane network element to determine to comprise second indication information in the first data, and the second indication information is used by the first application server to determine to comprise the identification information of the first session in the second data; and/or the first indication information is used by the first user plane network element to determine to comprise the identification information of the first session in the second data, and the identification information of the first session is used by the first application server to determine to comprise the identification information of the first session in the second data.

2. The method according to claim 1, wherein the identification information of the first session is an identifier allocated by the first user plane network element to the first session or is address information of the first session.

3. The method according to claim 1 or 2, wherein the second policy rule comprises the identification information of the first session, and the identification information of the first session is used by the first user plane network element to determine to send the second data to the network element associated with the first session.

4. The method according to any one of claims 1 to 3, wherein the method further comprises:
receiving, by the session management network element, third indication information from a policy control network element, wherein the third indication information is used to indicate the first application server to terminate a data flow of the first application; and
comprising, by the session management network element, the first indication information in the first policy rule based on the third indication information.

5. The method according to any one of claims 1 to 3, wherein the method further comprises:
receiving, by the session management network element, fourth indication information from a policy control network element, wherein the fourth indication information is used to indicate the first application server to terminate a data flow of the first application; and
comprising, by the session management network element, the identification information of the first session in the first policy rule based on the fourth indication information.

6. The method according to any one of claims 1 to 5, wherein the network element associated with the first session comprises:
an access network element of the first session, wherein the terminal accesses the access network element;
a second user plane network element, wherein the second user plane network element is configured to access the second application server;
a branch point network element, wherein the branch point network element is configured to send the first data to the first user plane network element; or
an uplink classifier network element, wherein the uplink classifier network element is configured to send the first data to the first user plane network element.

7. A communication method, comprising:
receiving, by a first user plane network element, a first policy rule and a second policy rule from a session management network element, wherein the first policy rule is used to indicate the first user plane network element to send first data of a first application to a first application server;
the second policy rule is used to indicate the first user plane network element to send second data of the first application to a network element associated with a first session, the first session is used to transmit data of the first application between a terminal and a second application server, the second data comes from the first application server, and the second data comprises an address of the first application server;
the first policy rule comprises first indication information;
the first indication information is used by the first user plane network element to determine to comprise second indication information in the first data, and the second indication information is used to indicate the first application server to comprise identification information of the first session in the second data; and/or the first indication information is used by the first user plane network element to determine to comprise the identification information of the first session in the second data, and the identification information of the first session is used by the first application server to determine to comprise the identification information of the first session in the second data.

8. The method according to claim 7, wherein the identification information of the first session is an identifier allocated by the first user plane network element to the first session or is address information of the first session.

9. The method according to claim 7 or 8, wherein the second policy rule comprises the identification information of the first session, and the identification information of the first session is used by the first user plane network element to determine to send the second data to the network element associated with the first session.

10. The method according to any one of claims 7 to 9, wherein the network element associated with the first session comprises:
an access network element of the first session, wherein the terminal accesses the access network element;
a second user plane network element, wherein the second user plane network element is configured to access the second application server;
a branch point network element, wherein the branch point network element is configured to send the first data to the first user plane network element; or
an uplink classifier network element, wherein the uplink classifier network element is configured to send the first data to the first user plane network element.

11. A communication method, comprising:
receiving, by a first application server, first data of a first application from a first user plane network element, wherein the first data comprises second indication information or identification information of a first session;
comprising, by the first application server, the identification information of the first session in second data based on the second indication information or the identification information of the first session, wherein the first session is used to transmit data of the first application between a terminal and a second application server, and the second data is determined based on the first data; and
sending, by the first application server, the second data to the first user plane network element.

12. The method according to claim 11, wherein the identification information of the first session is an identifier allocated by the first user plane network element to the first session or is address information of the first session.

13. A communication method, comprising:
receiving, by a session management network element, an address of a first application server from a policy control network element;
determining, by the session management network element, a first policy rule and a second policy rule, wherein the first policy rule is used to indicate a first user plane network element to steer first data of a first application to the first application server, the second policy rule comprises the address of the first application server, the address of the first application server is used by the first user plane network element to determine to send second data to a network element associated with a first session, the first session is used to transmit data of the first application between a terminal and a second application server, the second data comes from the first application server, and the second data comprises the address of the first application server; and
sending, by the session management network element, the first policy rule and the second policy rule to the first user plane network element.

14. The method according to claim 13, wherein the network element associated with the first session comprises:
an access network element of the first session, wherein the terminal accesses the access network element;
a second user plane network element, wherein the second user plane network element is configured to access the second application server;
a branch point network element, wherein the branch point network element is configured to send the first data to the first user plane network element; or
an uplink classifier network element, wherein the uplink classifier network element is configured to send the first data to the first user plane network element.

15. A communication method, comprising:
receiving, by a first user plane network element, a first policy rule and a second policy rule from a session management network element, wherein
the first policy rule is used to indicate the first user plane network element to steer first data of a first application to a first application server, the second policy rule comprises an address of the first application server, the address of the first application server is used by the first user plane network element to determine to send second data to a network element associated with a first session, the first session is used to transmit data of the first application between a terminal and a second application server, the second data comes from the first application server, and the second data comprises the address of the first application server.

16. A communication method, comprising:
receiving, by a policy control network element, a request message from a first application function network element, wherein the request message comprises an address of a terminal and an address of a first application server, the first application server corresponds to a first application, and the first application server corresponds to the first application function network element;
determining, by the policy control network element based on the address of the terminal, that the request message is associated with a first session, wherein the first session is used to transmit data of the first application between the terminal and a second application server, and the second application server corresponds to the first application; and
sending, by the policy control network element, the address of the first application server to a session management network element of the first session.

17. A communication method, comprising:
receiving, by a policy control network element, a request message from a first application function network element, wherein the request message comprises an address of a terminal and an address of a first application server, the first application server corresponds to a first application, and the first application server corresponds to the first application function network element;
determining, by the policy control network element based on the address of the terminal, that the request message is associated with a first session, wherein the first session is used to transmit data of the first application between the terminal and a second application server, and the second application server corresponds to the first application;
sending, by the policy control network element, the address of the first application server to a session management network element;
receiving, by the session management network element, the address of the first application server;
determining, by the session management network element, a first policy rule and a second policy rule, wherein the first policy rule is used to indicate a first user plane network element to steer first data of the first application to the first application server, the second policy rule comprises the address of the first application server, the address of the first application server is used by the first user plane network element to determine to send second data to a network element associated with the first session, the second data comes from the first application server, and the second data comprises the address of the first application server; and
sending, by the session management network element, the first policy rule and the second policy rule to the first user plane network element.

18. A communication apparatus, comprising:
a processing module, configured to determine a first policy rule and a second policy rule, wherein the first policy rule is used to indicate a first user plane network element to steer first data of a first application to a first application server, the second policy rule is used by the first user plane network element to determine to send second data of the first application to a network element associated with a first session, the first session is used to transmit data of the first application between a terminal and a second application server, the second data comes from the first application server, the second data comprises an address of the first application server, and the second data comprises identification information of the first session; and
a communication module, configured to send the first policy rule and the second policy rule to the first user plane network element, wherein
the first policy rule comprises first indication information;
the first indication information is used by the first user plane network element to determine to comprise second indication information in the first data, and the second indication information is used by the first application server to determine to comprise the identification information of the first session in the second data; and/or the first indication information is used by the first user plane network element to determine to comprise the identification information of the first session in the second data, and the identification information of the first session is used by the first application server to determine to comprise the identification information of the first session in the second data.

19. The communication apparatus according to claim 18, wherein the identification information of the first session is an identifier allocated by the first user plane network element to the first session or is address information of the first session.

20. The communication apparatus according to claim 18 or 19, wherein the second policy rule comprises the identification information of the first session, and the identification information of the first session is used by the first user plane network element to determine to send the second data to the network element associated with the first session.

21. The communication apparatus according to any one of claims 18 to 20, wherein the communication module is further configured to:
receive third indication information from a policy control network element, wherein the third indication information is used to indicate the first application server to terminate a data flow of the first application; and
the processing module is further configured to:
comprise the first indication information in the first policy rule based on the third indication information.

22. The communication apparatus according to any one of claims 18 to 20, wherein the communication module is further configured to:
receive fourth indication information from a policy control network element, wherein the fourth indication information is used to indicate the first application server to terminate a data flow of the first application; and
the processing module is further configured to:
comprise the identification information of the first session in the first policy rule based on the fourth indication information.

23. The communication apparatus according to any one of claims 18 to 22, wherein the network element associated with the first session comprises:
an access network element of the first session, wherein the terminal accesses the access network element;
a second user plane network element, wherein the second user plane network element is configured to access the second application server;
a branch point network element, wherein the branch point network element is configured to send the first data to the first user plane network element; or
an uplink classifier network element, wherein the uplink classifier network element is configured to send the first data to the first user plane network element.

24. A communication apparatus, comprising:
a communication module, configured to receive a first policy rule and a second policy rule from a session management network element, wherein the first policy rule is used to indicate the communication apparatus to send first data of a first application to a first application server;
the second policy rule is used to indicate the communication apparatus to send second data of the first application to a network element associated with a first session, the first session is used to transmit data of the first application between a terminal and a second application server, the second data comes from the first application server, and the second data comprises an address of the first application server;
the first policy rule comprises first indication information;
the first indication information is used by the communication apparatus to determine to comprise second indication information in the first data, and the second indication information is used to indicate the first application server to comprise identification information of the first session in the second data; and/or the first indication information is used by the communication apparatus to determine to comprise the identification information of the first session in the second data, and the identification information of the first session is used by the first application server to determine to comprise the identification information of the first session in the second data.

25. The communication apparatus according to claim 24, wherein the identification information of the first session is an identifier allocated by the communication apparatus to the first session or is address information of the first session.

26. The communication apparatus according to claim 24 or 25, wherein the second policy rule comprises the identification information of the first session, and the identification information of the first session is used by the communication apparatus to determine to send the second data to the network element associated with the first session.

27. The communication apparatus according to any one of claims 24 to 26, wherein the network element associated with the first session comprises:
an access network element of the first session, wherein the terminal accesses the access network element;
a second user plane network element, wherein the second user plane network element is configured to access the second application server;
a branch point network element, wherein the branch point network element is configured to send the first data to the communication apparatus; or
an uplink classifier network element, wherein the uplink classifier network element is configured to send the first data to the communication apparatus.

28. A communication apparatus, comprising:
a communication module, configured to receive first data of a first application from a first user plane network element, wherein the first data comprises second indication information or identification information of a first session; and
a processing module, configured to comprise the identification information of the first session in second data, wherein the first session is used to transmit data of the first application between a terminal and a second application server, and the second data is determined based on the first data, wherein
the communication module is further configured to send the second data to the first user plane network element.

29. The communication apparatus according to claim 28, wherein the identification information of the first session is an identifier allocated by the first user plane network element to the first session or is address information of the first session.

30. A communication apparatus, comprising:
a communication module, configured to receive an address of a first application server from a policy control network element; and
a processing module, configured to determine a first policy rule and a second policy rule, wherein the first policy rule is used to indicate a first user plane network element to steer first data of a first application to the first application server, the second policy rule comprises the address of the first application server, the address of the first application server is used by the first user plane network element to determine to send second data to a network element associated with a first session, the first session is used to transmit data of the first application between a terminal and a second application server, the second data comes from the first application server, and the second data comprises the address of the first application server, wherein
the communication module is further configured to send the first policy rule and the second policy rule to the first user plane network element.

31. The communication apparatus according to claim 30, wherein the network element associated with the first session comprises:
an access network element of the first session, wherein the terminal accesses the access network element;
a second user plane network element, wherein the second user plane network element is configured to access the second application server;
a branch point network element, wherein the branch point network element is configured to send the first data to the first user plane network element; or
an uplink classifier network element, wherein the uplink classifier network element is configured to send the first data to the first user plane network element.

32. A communication apparatus, comprising:
a communication module, configured to receive a first policy rule and a second policy rule from a session management network element, wherein
the first policy rule is used to indicate the communication apparatus to steer first data of a first application to a first application server, the second policy rule comprises an address of the first application server, the address of the first application server is used by the communication apparatus to determine to send second data to a network element associated with a first session, the first session is used to transmit data of the first application between a terminal and a second application server, the second data comes from the first application server, and the second data comprises the address of the first application server.

33. A communication apparatus, comprising:
a communication module, configured to receive a request message from a first application function network element, wherein the request message comprises an address of a terminal and an address of a first application server, the first application server corresponds to a first application, and the first application server corresponds to the first application function network element; and
a processing module, configured to determine, based on the address of the terminal, that the request message is associated with a first session, wherein the first session is used to transmit data of the first application between the terminal and a second application server, and the second application server corresponds to the first application, wherein
the communication module is further configured to send the address of the first application server to a session management network element of the first session.

34. A communication system, comprising:
a policy control network element, configured to receive a request message from a first application function network element, wherein the request message comprises an address of a terminal and an address of a first application server, the first application server corresponds to a first application, and the first application server corresponds to the first application function network element, wherein
the policy control network element is further configured to determine, based on the address of the terminal, that the request message is associated with a first session, wherein the first session is used to transmit data of the first application between the terminal and a second application server, and the second application server corresponds to the first application; and
the policy control network element is further configured to send the address of the first application server to a session management network element;
the session management network element, configured to receive the address of the first application server, wherein
the session management network element is further configured to determine a first policy rule and a second policy rule, wherein the first policy rule is used to indicate a first user plane network element to steer first data of the first application to the first application server, the second policy rule comprises the address of the first application server, the address of the first application server is used by the first user plane network element to determine to send second data to a network element associated with the first session, the second data comes from the first application server, and the second data comprises the address of the first application server; and
the session management network element is further configured to send the first policy rule and the second policy rule to the first user plane network element; and
the first user plane network element, configured to receive the first policy rule and the second policy rule.

35. A communication apparatus, comprising a memory and a processor, wherein the memory stores a computer program or instructions, and the processor is configured to invoke and execute the computer program or the instructions, to implement the communication method according to any one of claims 1 to 6.

36. A communication apparatus, comprising a memory and a processor, wherein the memory stores a computer program or instructions, and the processor is configured to invoke and execute the computer program or the instructions, to implement the communication method according to any one of claims 7 to 10.

37. A communication apparatus, comprising a memory and a processor, wherein the memory stores a computer program or instructions, and the processor is configured to invoke and execute the computer program or the instructions, to implement the communication method according to claim 11 or 12.

38. A communication apparatus, comprising a memory and a processor, wherein the memory stores a computer program or instructions, and the processor is configured to invoke and execute the computer program or the instructions, to implement the communication method according to claim 13 or 14.

39. A communication apparatus, comprising a memory and a processor, wherein the memory stores a computer program or instructions, and the processor is configured to invoke and execute the computer program or the instructions, to implement the communication method according to claim 15.

40. A communication apparatus, comprising a memory and a processor, wherein the memory stores a computer program or instructions, and the processor is configured to invoke and execute the computer program or the instructions, to implement the communication method according to claim 16.

41. A communication system, comprising the apparatus according to any one of claims 18 to 23 or 35, the apparatus according to any one of claims 24 to 27 or 36, the apparatus according to claim 28, 29, or 37, the apparatus according to claim 30, 31, or 38, the apparatus according to claim 32 or 39, and the apparatus according to claim 33 or 40.

42. A computer-readable storage medium, wherein the computer-readable storage medium stores a computer program or instructions; and when the computer program or the instructions are run on a computer, the computer is enabled to perform the communication method according to any one of claims 1 to 16.

43. A computer program product comprising instructions, comprising a computer program or the instructions, wherein when the computer program or the instructions are run on a computer, the computer is enabled to perform the communication method according to any one of claims 1 to 16.

44. A circuit, wherein the circuit is coupled to a memory, the memory stores a computer program or instructions, and the processor is configured to: when invoking and executing the computer program or the instructions, implement the communication method according to any one of claims 1 to 16.
